# EUROPEAN PATENT APPLICATION

(11) **EP 4 429 329 A1**
(43) Date of publication of application: **11.09.2024**
(21) Application number: 22900420.5
(22) Date of filing: 28.11.2022
(51) Int. Cl.: H04W 48/20

(54) **CELL SELECTION METHOD, CELL RESELECTION METHOD, AND COMMUNICATION APPARATUS**

(30) Priority: 01.12.2021 CN 202111456379
(71) Applicant: Huawei Technologies Co., Ltd., Shenzhen, Guangdong 518129 (CN)
(72) Inventor: MA, Chuan, Shenzhen, Guangdong 518129 (CN); JIN, Yinghao, Shenzhen, Guangdong 518129 (CN)
(74) Representative: Pfenning, Meinig & Partner mbB
(86) International application number: PCT/CN2022/134651
(87) International publication number: WO 2023/098616

(57) **Abstract**

Embodiments of this application provide a cell selection method, a cell reselection method, and a communication apparatus. The cell selection method includes: receiving a broadcast message, where the broadcast message includes indication information, the indication information indicates to camp on a first CCC cell, the first CCC cell is a CCC cell associated with a BCC cell, and the BCC cell is a BCC cell that is found by a terminal device and that satisfies a cell selection criterion; and determining, based on the indication information and the cell selection criterion, whether to camp on the first CCC cell. The indication information can indicate the terminal device to select an appropriate cell to camp on.

## Description

This application claims priority to Chinese Patent Application No. 202111456379.3, filed with the China National Intellectual Property Administration on December 1, 2021 and entitled "CELL SELECTION METHOD, CELL RESELECTION METHOD, AND COMMUNICATION APPARATUS", which is incorporated herein by reference in its entirety.

### TECHNICAL FIELD

This application relates to the field of communication technologies, and in particular, to a cell selection method, a cell reselection method, and a communication apparatus.

### BACKGROUND

In an energy-saving architecture of a multi-carrier network, carriers may be classified into a basic component carrier (basic component carrier, BCC) and a capacity component carrier (capacity component carrier, CCC). A BCC cell broadcasts a synchronization signal block (synchronization signal block, SSB) and system information (system information, SI) of the cell, and also broadcasts SI of a CCC cell. The CCC cell does not broadcast the SI, but broadcasts only a discovery reference signal (discovery reference signal, DRS).

When accessing a network for the first time, a terminal device needs to select a cell that satisfies a cell selection criterion to camp on. In other words, the terminal device needs to perform cell selection when accessing the network for the first time. For example, when the terminal device finds a BCC cell and the BCC cell satisfies the cell selection criterion, the terminal device may directly select the BCC cell to camp on, or may select a CCC cell associated with the BCC cell to camp on. Therefore, how the terminal device selects an appropriate cell to camp on is a problem to be urgently resolved.

### SUMMARY

Embodiments of this application disclose a cell selection method, a cell reselection method, and a communication apparatus, to select an appropriate cell to camp on.

According to a first aspect, an embodiment of this application provides a cell selection method, including:
receiving a broadcast message, where the broadcast message includes indication information, the indication information indicates to camp on a first CCC cell, the first CCC cell is a CCC cell associated with a BCC cell, and the BCC cell is a BCC cell that is found by a terminal device and that satisfies a cell selection criterion; and determining, based on the indication information and the cell selection criterion, whether to camp on the first CCC cell.

In this embodiment of this application, the terminal device may clearly learn, by receiving the broadcast message, that the terminal device can camp on the first CCC cell. This effectively improves a case in which the terminal device camps on another cell such as a BCC cell but the BCC cell is overloaded. Therefore, the terminal device can camp on an appropriate cell. It should be noted that the indication information indicates that the terminal device can camp on the first CCC cell, and whether the terminal device camps on the first CCC cell may be further determined according to the cell selection criterion.

In this embodiment of this application, the broadcast message is sent by a network device that communicates with the terminal device. The terminal device determines, based on the indication information included in the received broadcast message and the cell selection criterion, whether to camp on the first CCC cell. If the first CCC cell satisfies the cell selection criterion, the terminal device determines to camp on the first CCC cell. The network device indicates, by using the indication information, the terminal device to camp on the first CCC cell, so that the terminal device can be indicated to select an appropriate cell to camp on.

In a possible implementation of the first aspect, the first CCC cell is any one of one or more CCC cells associated with the BCC cell.

In this embodiment of this application, the terminal device determines, by using the received broadcast message, that the terminal device can camp on any one of the one or more CCC cells associated with the BCC cell. The terminal device may search the one or more CCC cells, and select a CCC cell that satisfies the cell selection criterion from the one or more CCC cells to camp on. This reduces load of the BCC cell.

In a possible implementation of the first aspect, the indication information includes identification information of the first CCC cell.

In this embodiment of this application, the terminal device determines, by including the identification information of the first CCC cell in the indication information, that the terminal device can camp on the first CCC cell. It may be understood that the first CCC cell is a cell that is determined by the network device and that is appropriate for the terminal device to camp on. For example, the first CCC cell is in a low-load state, or interference on the first CCC cell is relatively small. The terminal device may more accurately learn of, by using the identification information of the CCC cell that is carried in the indication information, an appropriate cell that can be camped on, so that the terminal device camps on the appropriate cell. This ensures quality of communication between the terminal device and the network device.

In a possible implementation of the first aspect, that the broadcast message includes indication information includes:

The broadcast message includes information about the first CCC cell, and the indication information is included in the information about the first CCC cell.

In this embodiment of this application, the terminal device may determine, by using the indication information carried in the information about the first CCC cell, that the terminal device can camp on the first CCC cell. It may be understood that the first CCC cell is a cell that is determined by the network device and that is appropriate for the terminal device to camp on. For example, the first CCC cell is in a low-load state, or interference on the first CCC cell is relatively small. The terminal device may more accurately learn of, by including the indication information in the information about the CCC cell, an appropriate cell that can be camped on, so that the terminal device camps on the appropriate cell. This ensures quality of communication between the terminal device and the network device.

In a possible implementation of the first aspect, the information about the first CCC cell includes an identifier of the first CCC cell and access information of the first CCC cell.

In this embodiment of this application, the identifier of the first CCC cell is used to enable the terminal device to quickly find the first CCC cell, the access information of the first CCC cell includes a cell selection parameter of the first CCC cell, and the terminal device may determine, based on the cell selection parameter of the first CCC cell, whether the first CCC cell satisfies the cell selection criterion. The information about the first CCC cell includes the identifier of the first CCC cell and the access information of the first CCC cell. The terminal device may quickly find the first CCC cell based on the identifier of the first CCC cell and determine whether the first CCC cell satisfies the cell selection criterion. This improves cell selection efficiency.

In a possible implementation of the first aspect, the first CCC cell is in a low-load state.

In this embodiment of this application, the first CCC cell is in a low-load state, and the network device indicates, by using the indication information carried in the broadcast message, the terminal device to camp on the first CCC cell. This can ensure quality of communication between the terminal device and the network device.

In a possible implementation of the first aspect, the broadcast message further includes information about the BCC cell.

In this embodiment of this application, the broadcast message may be a broadcast message that is broadcast by the BCC cell deployed on the network device, and the broadcast message includes the information about the BCC cell. The terminal device may determine, based on the information about the BCC cell, whether the BCC cell satisfies the cell selection criterion. The broadcast message of the BCC cell carries the information about the BCC cell and the indication information indicating the terminal device to camp on the first CCC cell. The terminal device determines, based on the information about the BCC cell, whether the BCC cell satisfies the cell selection criterion; and when the BCC cell satisfies the cell selection criterion, determines, based on the indication information and the cell selection criterion, whether to camp on the first CCC cell. This can improve cell selection efficiency.

In a possible implementation of the first aspect, the determining, based on the indication information and the cell selection criterion, whether to camp on the first CCC cell includes:
when the first CCC cell does not satisfy the cell selection criterion, determining not to camp on the first CCC cell; or when the first CCC cell satisfies the cell selection criterion, determining to camp on the first CCC cell.

In this embodiment of this application, when the first CCC cell satisfies the cell selection criterion, the terminal device determines to camp on the first CCC cell; or when the first CCC cell does not satisfy the cell selection criterion, the terminal device determines not to camp on the first CCC cell. A cell on which the terminal device camps needs to satisfy the cell selection criterion, to ensure that the terminal device can normally communicate with the network device.

In a possible implementation of the first aspect, after the determining not to camp on the first CCC cell, the method further includes:
determining to camp on the BCC cell.

In this embodiment of this application, when the BCC cell satisfies the cell selection criterion, and the terminal device determines not to camp on the first CCC cell, the terminal device determines to camp on the BCC cell, to complete a cell selection process. This ensures that the terminal device can normally communicate with the network device.

In a possible implementation of the first aspect, the receiving a broadcast message includes:
receiving the broadcast message when the BCC cell is in a high-load state.

In this embodiment of this application, when the BCC cell is in a high-load state, the network device sends the broadcast message including the indication information, and indicates, by including the indication information in the broadcast message, the terminal device to camp on the first CCC cell. This reduces load of the BCC cell.

According to a second aspect, an embodiment of this application provides a cell reselection method, including:
receiving a broadcast message, where the broadcast message includes neighboring cell information of a serving cell, and the neighboring cell information includes information about a CCC cell and information about a BCC cell associated with the CCC cell; and
determining to reselect the CCC cell based on the information about the BCC cell and a cell reselection criterion.

In this embodiment of this application, the broadcast message may be sent by a network device on which the serving cell of the terminal device is deployed. The broadcast message includes the neighboring cell information of the serving cell, the neighboring cell information includes the information about the CCC cell and the information about the BCC cell associated with the CCC cell, and the CCC cell is a neighboring cell of the serving cell. The terminal device may quickly determine, based on the information about the BCC cell, the BCC cell associated with the CCC cell. This improves cell reselection efficiency.

In a possible implementation of the second aspect, the determining to reselect the CCC cell based on the information about the BCC cell and a cell reselection criterion includes:
searching for the CCC cell based on the information about the CCC cell; when the CCC cell satisfies the cell reselection criterion, searching for the BCC cell based on the information about the BCC cell; and when the BCC cell is found, determining to reselect the CCC cell.

In this embodiment of this application, because system information of the CCC cell is broadcast by the BCC cell, before determining to reselect the CCC cell, the terminal device needs to determine that the BCC cell is found. The terminal device searches for the CCC cell based on the information about the CCC cell. When the CCC cell satisfies the cell reselection criterion, the terminal device searches for the BCC cell based on the information about the BCC cell. When finding the BCC cell, the terminal device determines to reselect the CCC cell. The terminal device searches for the CCC cell and the BCC cell respectively based on the information about the CCC cell and the information about the BCC cell, so that the CCC cell and the BCC cell can be quickly found. This reduces time for searching for the CCC cell and the BCC, and improves cell reselection efficiency.

In a possible implementation of the second aspect, the determining to reselect the CCC cell includes:
when reference signal received power RSRP of the BCC cell is greater than a first threshold and reference signal received quality RSRQ of the BCC cell is greater than a second threshold, determining to reselect the CCC cell.

In this embodiment of this application, the system information of the CCC cell is broadcast by the BCC cell. When the reference signal received power RSRP of the BCC cell is greater than the first threshold and the reference signal received quality RSRQ of the BCC cell is greater than the second threshold, the terminal device can obtain the system information of the CCC cell from the broadcast message of the BCC cell, and the terminal device determines to reselect the CCC cell. This ensures successful cell reselection.

In a possible implementation of the second aspect, when the CCC cell is an intra-frequency neighboring cell of the serving cell, that the CCC cell satisfies the cell reselection criterion includes:

The CCC cell is a cell whose R value is the largest in intra-frequency neighboring cells of the serving cell, and duration in which the R value of the CCC cell is greater than an R value of the serving cell is greater than or equal to first duration, where the R value of the CCC cell is determined based on reference signal received power RSRP of the CCC cell, and the R value of the serving cell is determined based on RSRP of the serving cell.

In a possible implementation of the second aspect, when the CCC cell is an equal-priority inter-frequency neighboring cell of the serving cell, that the CCC cell satisfies the cell reselection criterion includes:

The CCC cell is a cell whose R value is the largest in equal-priority inter-frequency neighboring cells of the serving cell, and duration in which the R value of the CCC cell is greater than an R value of the serving cell is greater than or equal to second duration, where the R value of the CCC cell is determined based on reference signal received power RSRP of the CCC cell, and the R value of the serving cell is determined based on RSRP of the serving cell.

In a possible implementation of the second aspect, when the CCC cell is a low-priority inter-frequency neighboring cell of the serving cell, that the CCC cell satisfies the cell reselection criterion includes: Duration in which RSRP of the CCC cell is greater than a third threshold and RSRP of the serving cell is less than a fourth threshold is greater than or equal to third duration; or duration in which reference signal received quality RSRQ of the CCC cell is greater than a fifth threshold and RSRQ of the serving cell is less than a sixth threshold is greater than or equal to fourth duration.

In a possible implementation of the second aspect, when the CCC cell is a high-priority inter-frequency neighboring cell of the serving cell, that the CCC cell satisfies the cell reselection criterion includes: Duration in which RSRP of the CCC cell is greater than a seventh threshold is greater than or equal to fifth duration; or duration in which RSRQ of the CCC cell is greater than an eighth threshold is greater than or equal to sixth duration.

In a possible implementation of the second aspect, the information about the BCC cell includes an identifier of the BCC cell and/or a channel number of the BCC cell.

In this embodiment of this application, the information about the BCC cell includes the identifier of the BCC cell and/or the channel number of the BCC cell, and the terminal device may quickly find the BCC cell based on the identifier of the BCC cell or the channel number of the BCC cell. This reduces time for searching for the BCC cell.

According to a third aspect, an embodiment of this application provides a communication apparatus, including:
a transceiver module, configured to receive a broadcast message, where the broadcast message includes indication information, the indication information indicates to camp on a first CCC cell, the first CCC cell is a CCC cell associated with a BCC cell, and the BCC cell is a BCC cell that is found by a terminal device and that satisfies a cell selection criterion; and
a processing module, configured to determine, based on the indication information and the cell selection criterion, whether to camp on the first CCC cell.

In a possible implementation of the third aspect, the first CCC cell is any one of one or more CCC cells associated with the BCC cell.

In a possible implementation of the third aspect, the indication information includes identification information of the first CCC cell.

In a possible implementation of the third aspect, that the broadcast message includes indication information includes: the broadcast message includes information about the first CCC cell, and the indication information is included in the information about the first CCC cell.

In a possible implementation of the third aspect, the information about the first CCC cell includes an identifier of the first CCC cell and access information of the first CCC cell.

In a possible implementation of the third aspect, the first CCC cell is in a low-load state.

In a possible implementation of the third aspect, the broadcast message further includes information about the BCC cell.

In a possible implementation of the third aspect, the processing module is specifically configured to: when the first CCC cell does not satisfy the cell selection criterion, determine not to camp on the first CCC cell; or when the first CCC cell satisfies the cell selection criterion, determine to camp on the first CCC cell.

In a possible implementation of the third aspect, the processing module is further configured to: when determining not to camp on the first CCC cell, determine to camp on the BCC cell.

In a possible implementation of the third aspect, the transceiver module is specifically configured to receive the broadcast message when the BCC cell is in a high-load state.

For technical effects brought by the third aspect or the possible implementations of the third aspect, refer to descriptions of technical effects of the first aspect or the possible implementations of the first aspect.

According to a fourth aspect, an embodiment of this application provides a communication apparatus, including:
a transceiver module, configured to receive a broadcast message, where the broadcast message includes neighboring cell information of a serving cell, and the neighboring cell information includes information about a CCC cell and information about a BCC cell associated with the CCC cell; and
a processing module, configured to determine to reselect the CCC cell based on the information about the BCC cell and a cell reselection criterion.

In a possible implementation of the fourth aspect, the processing module is specifically configured to: search for the CCC cell based on the information about the CCC cell; when the CCC cell satisfies the cell reselection criterion, search for the BCC cell based on the information about the BCC cell; and when finding the BCC cell, determine to reselect the CCC cell.

In a possible implementation of the fourth aspect, the processing module is specifically configured to: when reference signal received power RSRP of the BCC cell is greater than a first threshold and reference signal received quality RSRQ of the BCC cell is greater than a second threshold, determine to reselect the CCC cell.

In a possible implementation of the fourth aspect, when the CCC cell is an intra-frequency neighboring cell of the serving cell, that the CCC cell satisfies the cell reselection criterion includes: The CCC cell is a cell whose R value is the largest in intra-frequency neighboring cells of the serving cell, and duration in which the R value of the CCC cell is greater than an R value of the serving cell is greater than or equal to first duration, where the R value of the CCC cell is determined based on reference signal received power RSRP of the CCC cell, and the R value of the serving cell is determined based on RSRP of the serving cell.

In a possible implementation of the fourth aspect, when the CCC cell is an equal-priority inter-frequency neighboring cell of the serving cell, that the CCC cell satisfies the cell reselection criterion includes: The CCC cell is a cell whose R value is the largest in equal-priority inter-frequency neighboring cells of the serving cell, and duration in which the R value of the CCC cell is greater than an R value of the serving cell is greater than or equal to second duration, where the R value of the CCC cell is determined based on reference signal received power RSRP of the CCC cell, and the R value of the serving cell is determined based on RSRP of the serving cell.

In a possible implementation of the fourth aspect, when the CCC cell is a low-priority inter-frequency neighboring cell of the serving cell, that the CCC cell satisfies the cell reselection criterion includes: Duration in which RSRP of the CCC cell is greater than a third threshold and RSRP of the serving cell is less than a fourth threshold is greater than or equal to third duration; or duration in which reference signal received quality RSRQ of the CCC cell is greater than a fifth threshold and RSRQ of the serving cell is less than a sixth threshold is greater than or equal to fourth duration.

In a possible implementation of the fourth aspect, when the CCC cell is a high-priority inter-frequency neighboring cell of the serving cell, that the CCC cell satisfies the cell reselection criterion includes: Duration in which RSRP of the CCC cell is greater than a seventh threshold is greater than or equal to fifth duration; or duration in which RSRQ of the CCC cell is greater than an eighth threshold is greater than or equal to sixth duration.

In a possible implementation of the fourth aspect, the information about the BCC cell includes an identifier of the BCC cell and/or a channel number of the BCC cell.

For technical effects brought by the fourth aspect or the possible implementations of the fourth aspect, refer to descriptions of technical effects of the second aspect or the possible implementations of the second aspect.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

For the foregoing communication apparatuses, in a process of performing the foregoing method, a process of sending information in the foregoing method may be understood as a process of outputting the foregoing information by the processor. When the processor outputs the foregoing information, the processor outputs the foregoing information to a transceiver, so that the transceiver performs transmission. After the information is output by the processor, other processing may further need to be performed on the information and then the information arrives at the transceiver. Similarly, when the processor receives the input information, the transceiver receives the foregoing information, and inputs the information into the processor. Further, after the transceiver receives the foregoing information, other processing may need to be performed on the information and then the information is input into the processor.

Unless otherwise specified, operations such as transmission, sending, and receiving related to the processor may be more generally understood as operations such as output, receiving, and input of the processor if the operations do not conflict with actual functions or internal logic of the operations in related descriptions, instead of operations such as transmission, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application. It may be understood that descriptions of the processor and the memory are also applicable to a sixth aspect shown below. For ease of description, details are not described in the sixth aspect.

In a possible implementation, the memory is located outside the communication apparatus.

In a possible implementation, the memory is located inside the communication apparatus.

In this embodiment of this application, the processor and the memory may alternatively be integrated into one device, that is, the processor and the memory may alternatively be integrated together.

In a possible implementation, the communication apparatus further includes a transceiver. The transceiver is configured to receive a signal or send a signal.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device, that is, the processor and the memory may alternatively be integrated together.

In a possible implementation, the communication apparatus further includes a transceiver. The transceiver is configured to receive a signal or send a signal.

According to a seventh aspect, an embodiment of this application provides a communication apparatus. The communication apparatus includes a logic circuit and an interface. The logic circuit and the interface are coupled. The interface is configured to receive a broadcast message. The logic circuit is configured to determine, based on the broadcast message, whether to camp on a first CCC cell.

For specific descriptions of the broadcast message, the first CCC cell, and the like, refer to the first aspect. Details are not described herein again.

According to an eighth aspect, an embodiment of this application provides a communication apparatus. The communication apparatus includes a logic circuit and an interface. The logic circuit and the interface are coupled. The interface is configured to receive a broadcast message. The logic circuit is configured to determine to reselect a CCC cell based on the broadcast message.

For specific descriptions of the broadcast message, the CCC cell, and the like, refer to the second aspect. Details are not described herein again.

According to a ninth aspect, an embodiment of this application provides a computer-readable storage medium. The computer-readable storage medium is configured to store a computer program, and when the computer program is run on a computer, the method according to any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method according to any one of the second aspect or the possible implementations of the second aspect is performed.

According to an eleventh aspect, an embodiment of this application provides a computer program product. The computer program product includes a computer program or computer code, and when the computer program or the computer code is run on a computer, the method according to any one of the first aspect or the possible implementations of the first aspect is performed.

According to a twelfth aspect, an embodiment of this application provides a computer program product. The computer program product includes a computer program or computer code, and when the computer program or the computer code is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

### BRIEF DESCRIPTION OF DRAWINGS

The following describes accompanying drawings used in embodiments of this application.
FIG. 1 is a diagram of a communication scenario according to an embodiment of this application;
FIG. 2A is a diagram of a structure of a multi-carrier network according to an embodiment of this application;
FIG. 2B is a diagram of a structure of a multi-carrier network according to an embodiment of this application;
FIG. 3 is a diagram of cell broadcast according to an embodiment of this application;
FIG. 4 is a diagram of another cell broadcast according to an embodiment of this application;
FIG. 5 is a schematic flowchart of a cell selection method according to an embodiment of this application;
FIG. 6 is a schematic flowchart of another cell selection method according to an embodiment of this application;
FIG. 7 is a schematic flowchart of another cell selection method according to an embodiment of this application;
FIG. 8 is a schematic flowchart of another cell selection method according to an embodiment of this application;
FIG. 9 is a schematic flowchart of another cell selection method according to an embodiment of this application;
FIG. 10 is a schematic flowchart of a cell reselection method according to an embodiment of this application;
FIG. 11 is a schematic flowchart of another cell reselection method according to an embodiment of this application;
FIG. 12 is a schematic flowchart of another cell reselection method according to an embodiment of this application;
FIG. 13 is a schematic flowchart of another cell reselection method according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of another communication apparatus according to an embodiment of this application.

### DESCRIPTION OF EMBODIMENTS

The following describes embodiments of this application with reference to the accompanying drawings in embodiments of this application.

Technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, or a new radio (new radio, NR) system.

In embodiments of this application, a terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

In embodiments of this application, a network device may be a device configured to communicate with a terminal device. The network device may be an evolved NodeB (evolved NodeB, eNB or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

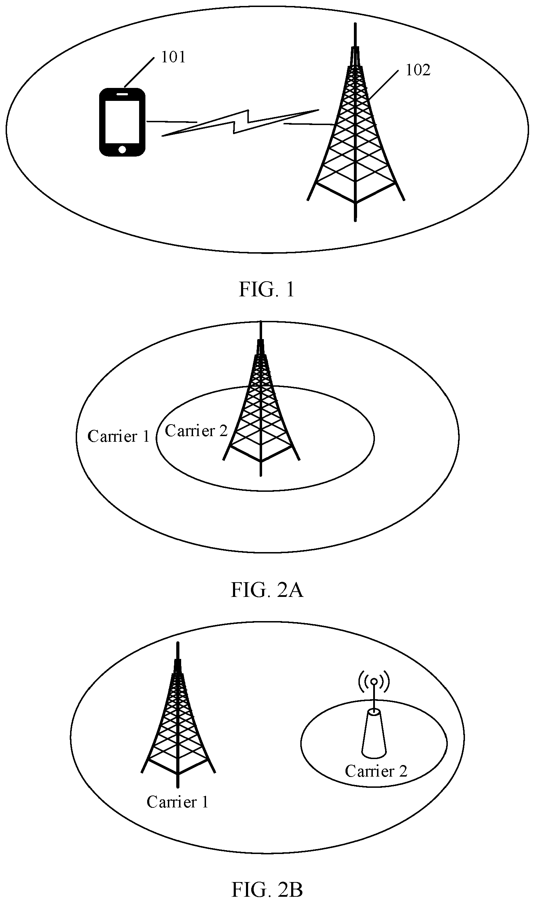

FIG. 1 is a diagram of a communication scenario according to an embodiment of this application. The communication scenario includes at least one terminal device 101 and at least one network device 102. In FIG. 1, one terminal device 101 and one network device 102 are used as an example. The network device 102 may be an access network device, for example, a base station. The network device 102 includes one or more cells. When moving into a coverage area of a cell, the terminal device 101 may perform cell selection or cell reselection. The cell selection is a process in which the terminal device selects a cell that satisfies a cell selection criterion and camps on the cell when accessing a network for the first time. For example, the cell selection may be performed when the terminal device is powered on or when the terminal device re-accesses the network after being disconnected from the network. Alternatively, the cell selection may be performed when the terminal device enters an idle state from a connected state. The cell reselection is a process that, after the terminal device accesses a network, when there is a cell with better signal quality than a current serving cell, the terminal device reselects the cell and camps on the cell. For example, the cell reselection may be performed when the terminal device is in an idle state.

Before methods in this application are described in detail, some concepts in this application are first briefly described.

### 1. Multi-carrier network

The multi-carrier network may transmit data in a manner in which a plurality of carrier signals are parallel. Each carrier may correspond to one cell. In the multi-carrier network, a carrier may also be referred to as a component carrier (component carrier, CC). For example, a plurality of carriers in the multi-carrier network may be co-sited, that is, the plurality of carriers may be deployed on a same base station. As shown in FIG. 2A, two carriers are used as an example in FIG. 2A. The two carriers are respectively a carrier 1 and a carrier 2. The carrier 1 and the carrier 2 are deployed on a same base station. For example, a plurality of carriers in the multi-carrier network may alternatively be inter-sited, that is, the plurality of carriers may be deployed on different base stations. As shown in FIG. 2B, two carriers are used as an example in FIG. 2B. The two carriers are respectively a carrier 1 and a carrier 2. The carrier 1 and the carrier 2 are respectively deployed on different base stations.

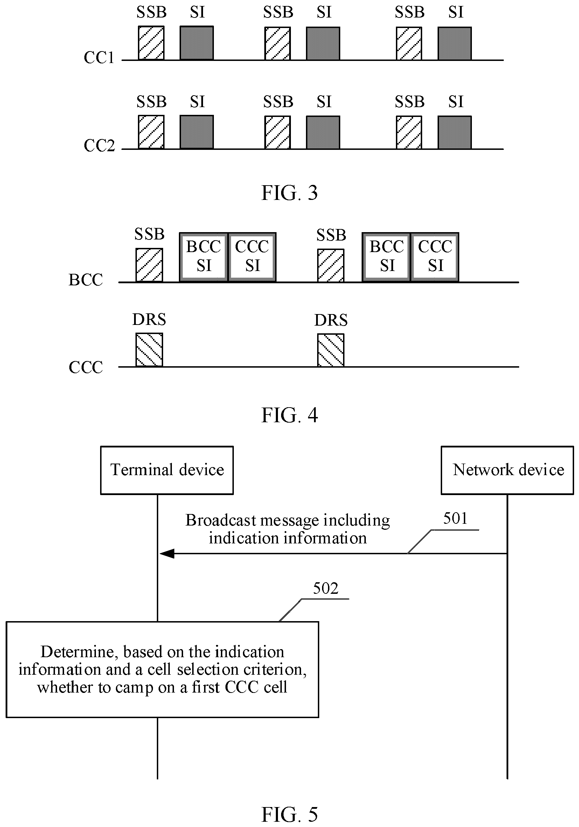

Generally, in the multi-carrier network, each cell independently broadcasts a synchronization signal block (synchronization signal block, SSB) and system information (system information, SI) of the cell. FIG. 3 shows an example of cell broadcast in the multi-carrier network. Two cells are used as an example in FIG. 3. The two cells are respectively CC1 and CC2. CC1 broadcasts an SSB and SI of CC1, and CC2 broadcasts an SSB and SI of CC2.

In an energy-saving architecture of the multi-carrier network, carriers may be classified into a basic component carrier (basic component carrier, BCC) and a capacity component carrier (capacity component carrier, CCC). A BCC cell broadcasts an SSB and SI of the cell, and also broadcasts SI of a CCC cell. However, the CCC cell does not broadcast an SSB and the SI of the cell, but broadcasts only a discovery reference signal (discovery reference signal, DRS). For example, the DRS has a basic function of the SSB, that is, the DRS can complete downlink time and frequency synchronization. However, a quantity of orthogonal frequency division multiplexing (orthogonal frequency division multiplexing, OFDM) symbols occupied by the DRS is less than a quantity of OFDM symbols occupied by the SSB. For example, the SSB occupies four OFDM symbols, and the DRS may occupy one to three OFDM symbols. FIG. 4 shows an example of cell broadcast in the energy-saving architecture of the multi-carrier network. Two cells are used as an example in FIG. 4. The two cells are respectively a BCC cell and a CCC cell. The BCC cell broadcasts an SSB of the BCC cell, SI of the BCC cell, and SI of the CCC cell. The CCC cell broadcasts a DRS.

For example, one BCC cell may be associated with one or more CCC cells, that is, a broadcast message of one BCC cell may include system information of one or more CCC cells. Because a CCC cell does not broadcast SI, a terminal device may obtain the SI of the CCC cell from a broadcast message of a BCC cell associated with the CCC cell.

In the energy-saving architecture of the multi-carrier network, for the CCC cell, the CCC cell does not broadcast the SSB and the SI, but broadcasts only the DRS. This saves OFDM symbols used to transmit the SI and the SSB of the CCC cell, thereby increasing a time-domain shutdown opportunity and reducing power consumption. For the BCC cell, because the BCC cell needs to broadcast the SI of the CCC cell, power consumption of the BCC cell increases. However, the increased power consumption of the BCC cell is less than that reduced by the CCC cell. Therefore, the overall power consumption of the multi-carrier network can be reduced.

### 2. Cell selection

When a terminal device accesses a network for the first time, for example, when the terminal device is powered on, exits a radio resource control (radio resource control, RRC) connected state (connected state), enters a network coverage area, or encounters a radio link failure (radio link failure, RLF), the terminal device needs to select a cell to camp on or perform RRC reestablishment. This process is referred to as the cell selection (cell selection).

For example, in the cell selection process, the terminal device may perform cell search on a plurality of frequencies. For example, the terminal device may search for a cell with strongest signal strength on each frequency. If the terminal device finds a cell that satisfies a cell selection criterion, the terminal device selects the cell to camp on. For example, the plurality of frequencies may be frequencies, configured by the terminal device, at which cells in a mobile network are located. For example, the plurality of frequencies may be configured in a SIM (subscriber identity module) card.

For example, the cell selection criterion includes a criterion S. The criterion S includes: S 1>0 and S2>0.

For example, S 1 may be denoted as Srxlev, and represents a cell selection receive level value of a cell; and S2 may be denoted as Squal, and represents a cell selection quality value of the cell. S 1 and S2 satisfy the following formulas: $S 1 = Q 1 - \left({Q}_{r x l e v min}+{Q}_{r x l e v min offset}\right) - {P}_{compensation} - {Q}_{offsettemp}$ $S 2 = Q 2 - \left({Q}_{q u a l min}+{Q}_{q u a l min offset}\right) - {Q}_{offsettemp}$

Q1 is reference signal received power (reference signal received power, RSRP) of a broadcast message (for example, an SSB or SI) of the cell, Qᵣₓₗₑᵥₘᵢₙ represents minimum RSRP required for cell camping, Q_{rxlevminoffset} represents an offset of Qᵣₓₗₑᵥₘᵢₙ, Pcompensation represents a power compensation value, and Qoffsettemp represents a temporary offset. Q2 is reference signal received quality (reference signal received quality, RSRQ) of the cell, Q_{qualmin} represents minimum RSRQ required for cell camping, and Q_{qualminoffset} represents an offset of Q_{qualmin}.

For example, Q1 and Q2 may be obtained by the terminal device by measuring signal strength of the received broadcast message (for example, the SSB or the SI) of the cell. The parameters Qᵣₓₗₑᵥₘᵢₙ, Q_{rxlevminoffset}, Q_{qualmin}, Q_{qualminoffset}, P_{compensation}, and Q_{offsettemp} may be included in the system information of the cell, or may be derived from parameters in the system information of the cell. For ease of description, Qᵣₓₗₑᵥₘᵢₙ, Q_{rxlevminoffset}, Q_{qualmin}, Q_{qualminoffset}, P_{compensation}, and Q_{offsettemp} are referred to as cell selection parameters in embodiments of this application.

For example, the cell selection criterion further includes a network homing criterion. The network homing criterion includes: a network to which a cell belongs is any one of a selected network (selected network), a registered network (registered network), or an equivalent network (equivalent network) of the terminal device.

For example, the cell selection criterion further includes a cell availability criterion. The cell availability criterion includes: a cell is not barred (barred) or reserved (reserved), and the cell is not in a tracking area included in a list of forbidden tracking areas for roaming (forbidden tracking areas for roaming).

It should be noted that the cell selection criterion is merely an example. With evolution of a standard technology, the cell selection criterion may change. In this case, the cell selection criterion is also applicable to the methods provided in embodiments of this application. Therefore, the cell selection criterion described above should not be understood as a limitation on implementation of this application.

### 3. Cell reselection

A terminal device in an RRC idle state (idle state) and an RRC inactive state (inactive state) may reselect another cell to camp on. This process is referred to as the cell reselection (cell reselection). In the cell reselection process, the terminal device first measures neighboring cells of a serving cell; and if a neighboring cell that satisfies a cell reselection criterion is obtained through measurement, the terminal device reselects the neighboring cell.

For example, the cell reselection may include intra-frequency cell reselection (intra-frequency cell reselection) and inter-frequency cell reselection (inter-frequency cell reselection). The intra-frequency cell reselection means that the terminal device reselects a neighboring cell that has a same frequency as the serving cell (serving cell). The inter-frequency cell reselection means that the terminal device reselects a neighboring cell that has a different frequency from the serving cell. The serving cell is a cell on which the terminal device currently camps. Based on priorities of the frequencies of the serving cell and the neighboring cells, the inter-frequency cell reselection is further classified into equal-priority inter-frequency cell reselection, low-priority inter-frequency cell reselection, and high-priority inter-frequency cell reselection. The equal-priority inter-frequency cell reselection indicates that an inter-frequency neighboring cell whose frequency priority is equal to that of the serving cell is reselected. The low-priority inter-frequency cell reselection indicates that an inter-frequency neighboring cell whose frequency priority is lower than that of the serving cell is reselected. The high-priority inter-frequency cell reselection indicates that an inter-frequency neighboring cell whose frequency priority is higher than that of the serving cell is reselected. For example, the foregoing frequency priorities are configured by a network device.

### (1) Intra-frequency cell reselection

For example, when signal strength of the serving cell of the terminal device satisfies S1≤S1ᵢₙₜᵣₐ or S2≤S2ᵢₙₜᵣₐ, the terminal device performs intra-frequency neighboring cell measurement. For calculation formulas of S1 and S2, refer to the related descriptions in the foregoing cell selection. S1ᵢₙₜᵣₐ and S2ᵢₙₜᵣₐ are respectively thresholds of S 1 and S2. When S 1 of the serving cell is less than the threshold S1ᵢₙₜᵣₐ or S2 of the serving cell is less than or equal to the threshold S2ᵢₙₜᵣₐ, the terminal device performs the intra-frequency neighboring cell measurement, to reselect an intra-frequency neighboring cell. For example, S1ᵢₙₜᵣₐ and S2ᵢₙₜᵣₐ may be included in system information of the serving cell. The terminal device receives the system information that is broadcast by the serving cell, and obtains S1ᵢₙₜᵣₐ and S2ᵢₙₜᵣₐ from the system information of the serving cell.

For example, the terminal device measures each intra-frequency neighboring cell of the serving cell. The terminal device obtains an intra-frequency neighboring cell through measurement, that is, receives a broadcast message of the intra-frequency neighboring cell, for example, an SSB or SI. The terminal device first determines whether signal strength of the intra-frequency neighboring cell satisfies the criterion S. For the criterion S, refer to the related descriptions in the foregoing cell selection. If the intra-frequency neighboring cell satisfies the criterion S, the terminal device calculates an R value of the intra-frequency neighboring cell. The R value of the intra-frequency neighboring cell satisfies the following formula: $R = Qn - {Q}_{offset} - {Q}_{offsettempn}$

Qn is RSRP of the broadcast message (for example, the SSB or the SI) of the intra-frequency neighboring cell, Q_{offset} is an offset of the intra-frequency neighboring cell relative to the serving cell, and Q_{offsettemp,n} is an offset of the intra-frequency neighboring cell. Q_{offset} and Q_{offsettemp,n} are included in the system information of the serving cell.

For example, the terminal device obtains, through measurement, at least one intra-frequency neighboring cell that satisfies the criterion S, and calculates an R value of the at least one intra-frequency neighboring cell. If an R value of a first intra-frequency neighboring cell remains greater than an R value of the serving cell and the first intra-frequency neighboring cell satisfies the network homing criterion and the cell availability criterion within a specified time interval, the terminal device determines to reselect the first intra-frequency neighboring cell. The first intra-frequency neighboring cell is one intra-frequency neighboring cell with a largest R value in the at least one intra-frequency neighboring cell. For example, the specified time interval may be specified in a protocol, or may be configured by the network device.

For example, the R value of the serving cell satisfies the following formula: $R = Qs + {Q}_{hyst} - {Q}_{offsteeemp , s}$

Qs is RSRP of a broadcast message (for example, an SSB or SI) of the serving cell, Q_{hyst} is a hysteresis (hysteresis) of the serving cell, and Q_{offsettemp,s} is an offset of the serving cell. For example, the two parameters Q_{hyst} and Q_{offsettemp,s} are included in the system information of the serving cell, and Qs may be obtained by measuring signal strength of the SSB that is broadcast by the serving cell. For ease of description, Q_{offset}, Q_{offsettemp,n}, Q_{hyst}, and Q_{offsettemp,s} are referred to as cell reselection parameters in embodiments of this application.

For example, the R value of the cell may represent a cell reselection priority of the cell.

### (2) Equal-priority inter-frequency cell reselection

For example, when the signal strength of the serving cell satisfies S1≤S1ₙₒₙ₋ᵢₙₜᵣₐ or S2≤S2ₙₒₙ₋ᵢₙₜᵣₐ, the terminal device performs equal-priority inter-frequency neighboring cell measurement. For calculation formulas of S 1 and S2, refer to the related descriptions in the foregoing cell selection. S1ₙₒₙ₋ᵢₙₜᵣₐ and S2ₙₒₙ₋ᵢₙₜᵣₐ are respectively thresholds of S 1 and S2. When S 1 of the serving cell is less than the threshold S1ₙₒₙ₋ᵢₙₜᵣₐ or S2 of the serving cell is less than or equal to the threshold S2ₙₒₙ₋ᵢₙₜᵣₐ, the terminal device performs the equal-priority inter-frequency neighboring cell measurement, to reselect an equal-priority inter-frequency neighboring cell. For example, S1ₙₒₙ₋ᵢₙₜᵣₐ and S2ₙₒₙ₋ᵢₙₜᵣₐ are included in the system information of the serving cell. The terminal device receives the system information that is broadcast by the serving cell, and obtains S1ₙₒₙ₋ᵢₙₜᵣₐ and S2ₙₒₙ₋ᵢₙₜᵣₐ from the system information.

For example, the terminal device measures each equal-priority inter-frequency neighboring cell of the serving cell. If a measured equal-priority inter-frequency neighboring cell satisfies the criterion S, the terminal device calculates an R value of the equal-priority inter-frequency neighboring cell. For calculation of the R value of the equal-priority inter-frequency neighboring cell, refer to the related descriptions of the R value of the intra-frequency neighboring cell in the foregoing intra-frequency cell reselection.

For example, the terminal device obtains, through measurement, at least one equal-priority inter-frequency neighboring cell that satisfies the criterion S, and calculates an R value of the at least one equal-priority inter-frequency neighboring cell. If an R value of a first equal-priority inter-frequency neighboring cell remains greater than the R value of the serving cell and the first equal-priority inter-frequency neighboring cell satisfies the network homing criterion and the cell availability criterion within the specified time interval, the terminal device determines to reselect the first equal-priority inter-frequency neighboring cell. The first equal-priority inter-frequency neighboring cell is one equal-priority inter-frequency neighboring cell with a largest R value in the at least one equal-priority inter-frequency neighboring cell. For calculation of the R value of the serving cell, refer to the related descriptions of the R value of the serving cell in the foregoing intra-frequency cell reselection.

### (3) Low-priority inter-frequency neighboring cell reselection

For example, when the signal strength of the serving cell satisfies S1≤S1ₙₒₙ₋ᵢₙₜᵣₐ or S2≤S2ₙₒₙ₋ᵢₙₜᵣₐ, the terminal device performs low-priority inter-frequency neighboring cell measurement. For S1 and S2, refer to the related descriptions in the foregoing cell selection. S1ₙₒₙ₋ᵢₙₜᵣₐ and S2ₙₒₙ₋ᵢₙₜᵣₐ are respectively thresholds of S1 and S2. When S1 of the serving cell is less than the threshold S1ₙₒₙ₋ᵢₙₜᵣₐ or S2 of the serving cell is less than or equal to the threshold S2ₙₒₙ₋ᵢₙₜᵣₐ, the terminal device performs the low-priority inter-frequency neighboring cell measurement, to reselect a low-priority inter-frequency neighboring cell. For example, S1ₙₒₙ₋ᵢₙₜᵣₐ and S2ₙₒₙ₋ᵢₙₜᵣₐ are included in the system information of the serving cell. The terminal device receives the system information that is broadcast by the serving cell, and obtains S1ₙₒₙ₋ᵢₙₜᵣₐ and S2ₙₒₙ₋ᵢₙₜᵣₐ from the system information.

For example, the terminal device measures a first low-priority inter-frequency neighboring cell. The first low-priority inter-frequency neighboring cell is any one of at least one low-priority inter-frequency neighboring cell of the serving cell. When the first low-priority inter-frequency neighboring cell satisfies the criterion S, the network homing criterion, and the cell availability criterion, if the first low-priority inter-frequency neighboring cell satisfies one or more items in a low-priority inter-frequency neighboring cell reselection condition, the terminal device determines to reselect the first low-priority inter-frequency neighboring cell. The low-priority inter-frequency neighboring cell reselection condition includes the following conditions:
Condition 1: S1 of the serving cell is less than Th_{s,low,p}, and S1 of the first low-priority inter-frequency neighboring cell remains greater than Th_{x,low,p} within the specified time interval.
Condition 2: S2 of the serving cell is less than Th_{s,low,q}, and S2 of the first low-priority inter-frequency neighboring cell remains greater than Th_{x,low,q} within the specified time interval.

Th_{s,low,p}, Th_{x,low,p}, Th_{s,low,q}, and Th_{x,low,q} represent thresholds, and these parameters are included in the system information of the serving cell. When the first low-priority inter-frequency neighboring cell satisfies any one item in the foregoing low-priority inter-frequency neighboring cell reselection condition, the terminal device determines to reselect the first low-priority inter-frequency neighboring cell.

It should be understood that the foregoing low-priority inter-frequency neighboring cell reselection condition is merely an example. The low-priority inter-frequency neighboring cell reselection condition in embodiments of this application is not limited to the foregoing two examples, and may further include other new low-priority inter-frequency neighboring cell reselection conditions that emerge with development of technologies. Therefore, the low-priority inter-frequency neighboring cell reselection condition described above should not be understood as a limitation on implementation of this application.

### (4) High-priority inter-frequency cell reselection

The terminal device measures a high-priority inter-frequency neighboring cell of the serving cell. For example, the terminal device may periodically measure the high-priority inter-frequency neighboring cell, to reselect a high-priority inter-frequency neighboring cell.

For example, the terminal device measures a first high-priority inter-frequency neighboring cell. The first high-priority inter-frequency neighboring cell is any one of at least one high-priority inter-frequency neighboring cell of the serving cell. When the first high-priority inter-frequency neighboring cell satisfies the criterion S, the network homing criterion, and the cell availability criterion, if the first high-priority inter-frequency neighboring cell satisfies a high-priority inter-frequency neighboring cell reselection condition, the terminal device determines to reselect the first high-priority inter-frequency neighboring cell. The high-priority inter-frequency neighboring cell reselection condition includes the following conditions:
Condition 1: S1 of the first high-priority inter-frequency neighboring cell is greater than Th_{x,high,p} within the specified time interval.
Condition 2: S2 of the first high-priority inter-frequency neighboring cell is greater than Th_{x,high,q} within the specified time interval.

Th_{x,high,p} and Th_{x,high,q} represent thresholds, and these parameters are included in the system information of the serving cell. When the first high-priority inter-frequency neighboring cell satisfies any one item in the foregoing high-priority inter-frequency neighboring cell reselection condition, the terminal device determines to reselect the first high-priority inter-frequency neighboring cell.

It should be understood that the foregoing high-priority inter-frequency neighboring cell reselection condition is merely an example. The high-priority inter-frequency neighboring cell reselection condition in embodiments of this application is not limited to the foregoing two examples, and may further include other new high-priority inter-frequency neighboring cell reselection conditions that emerge with development of technologies. Therefore, the high-priority inter-frequency neighboring cell reselection condition described above should not be understood as a limitation on implementation of this application.

FIG. 5 is a schematic flowchart of a cell selection method according to an embodiment of this application. As shown in FIG. 5, the cell selection method includes but is not limited to the following steps.

501: A terminal device receives a broadcast message sent by a network device, where the broadcast message includes indication information, the indication information indicates to camp on a first CCC cell, the first CCC cell is a CCC cell associated with a BCC cell, and the BCC cell is a BCC cell that is found by the terminal device and that satisfies a cell selection criterion.

For example, the broadcast message may be any broadcast message that is broadcast by the network device communicating with the terminal device, or may be a broadcast message that is broadcast by the BCC cell deployed on the network device. The broadcast message includes the indication information, and the indication information indicates the terminal device to camp on the first CCC cell associated with the BCC cell. It may be understood that the indication information may alternatively indicate the terminal device to preferentially camp on the first CCC cell in the BCC cell and one or more CCC cells associated with the BCC cell. After receiving the broadcast message, the terminal device determines whether the first CCC cell satisfies the cell selection criterion.

For example, the cell selection criterion may include a criterion S, that is, S1>0 and S2>0. The BCC cell satisfies the cell selection criterion, that is, for the BCC cell, S1>0 and S2>0. For calculation formulas of S1 and S2 of the BCC cell, refer to the related descriptions in the foregoing cell selection. It may be understood that, for specific descriptions of the cell selection criterion, refer to the foregoing descriptions. Details are not described herein again.

For example, that the terminal device finds the BCC cell means that the terminal device detects a broadcast message (for example, an SSB or SI) that is broadcast by the BCC cell. After detecting the broadcast message that is broadcast by the BCC cell, the terminal device measures the received broadcast message to obtain RSRP and RSRQ of the broadcast message of the BCC cell. The BCC cell found by the terminal device is a BCC cell that is found by the terminal device and that satisfies the cell selection criterion.

For example, the cell selection criterion further includes a network homing criterion and a cell availability criterion. For specific descriptions of the network homing criterion and the cell availability criterion, refer to the foregoing descriptions. Details are not described herein again.

For example, the BCC cell and the first CCC cell may be deployed on a same network device (co-site deployment), or may be deployed on different network devices (inter-site deployment).

In an implementation, the broadcast message further includes information about the BCC cell. The information about the BCC cell may include an identifier of the BCC cell and access information of the BCC cell.

For example, the broadcast message is the broadcast message of the BCC cell. After receiving the broadcast message, the terminal device determines, based on the information about the BCC cell that is included in the broadcast message, whether the BCC cell satisfies the cell selection criterion. For example, the access information of the BCC cell includes a cell selection parameter of the BCC. The terminal device detects the RSRP and the RSRQ of the received broadcast message, and calculates S 1 and S2 of the BCC cell based on the RSRP, the RSRQ, and the cell selection parameter of the BCC cell. When S 1 and S2 of the BCC cell satisfy S 1>0 and S2>0, the terminal device determines that the BCC cell satisfies the cell selection criterion.

For example, the identifier of the BCC cell may include a PCI or a cell identity (cell identity). The access information of the BCC cell may include the cell selection parameter of the BCC cell, a barring factor (Barring Factor) for cell access control, and the like.

For example, the information about the BCC cell may further include configuration information of the BCC cell. The configuration information of the BCC cell may include time domain and frequency domain positions of a physical downlink control channel (physical downlink control channel, PDCCH) and a physical downlink shared channel (physical downlink shared channel, PDSCH), a root sequence index of a physical random access channel (physical random access channel, PRACH), and the like.

In this embodiment of this application, the broadcast message may be the broadcast message that is broadcast by the BCC cell deployed on the network device, and the broadcast message includes the information about the BCC cell. The terminal device may determine, based on the information about the BCC cell, whether the BCC cell satisfies the cell selection criterion. The broadcast message of the BCC cell carries the information about the BCC cell and the indication information indicating the terminal device to camp on the first CCC cell. The terminal device determines, based on the information about the BCC cell, whether the BCC cell satisfies the cell selection criterion; and when the BCC cell satisfies the cell selection criterion, determines, based on the indication information and the cell selection criterion, whether to camp on the first CCC cell. This can improve cell selection efficiency.

In an implementation, the receiving a broadcast message includes the following step:
receiving the broadcast message when the BCC cell is in a high-load state.

For example, when the BCC cell is in a high-load state, the network device sends the broadcast message including the indication information, to indicate the terminal device to camp on the first CCC cell. This reduces load of the BCC cell.

In an implementation, when interference on the first CCC cell is relatively small, the network device sends the broadcast message including the indication information, to indicate the terminal device to camp on the first CCC cell. For example, that interference on the first CCC cell is relatively small may mean that the interference on the first CCC cell is less than interference on the BCC cell, or may mean that the interference on the first CCC cell is less than a specified threshold. Because the interference on the first CCC cell is relatively small, when accessing the first CCC cell, the terminal device may transmit data by using relatively small power. This improves transmission power efficiency.

To explain the first CCC cell in more detail, this embodiment of this application further provides the following several cases:
Case 1: The first CCC cell is any one of the one or more CCC cells associated with the BCC cell.

For example, the BCC cell may be associated with the one or more CCC cells, and the indication information indicates the terminal device to camp on any one of the one or more CCC cells associated with the BCC cell.

In this embodiment of this application, the terminal device determines, by using the received broadcast message, that the terminal device can camp on any one of the one or more CCC cells associated with the BCC cell. The terminal device may search the one or more CCC cells, and select a CCC cell that satisfies the cell selection criterion from the one or more CCC cells to camp on. This reduces load of the BCC cell.

Case 2: The indication information includes identification information of the first CCC cell, that is, the first CCC cell is a CCC cell corresponding to identification information carried in the indication information.

For example, the terminal device determines, by including the identification information of the first CCC cell in the indication information, that the terminal device can camp on the first CCC cell. It may be understood that the first CCC cell is a cell that is determined by the network device and that is appropriate for the terminal device to camp on. For example, the first CCC cell is in a low-load state, or the interference on the first CCC cell is relatively small. The terminal device may more accurately learn of, by using the identification information of the CCC cell that is carried in the indication information, an appropriate cell that can be camped on, so that the terminal device camps on the appropriate cell. This ensures quality of communication between the terminal device and the network device.

For example, the first CCC cell is in a low-load state. For example, that the first CCC cell is in a low-load state may mean that a resource block (resource block, RB) occupation rate of the first CCC cell is less than a specified threshold, for example, an RB occupation rate of the first CCC cell is less than 30%. For example, that the first CCC cell is in a low-load state may alternatively mean that a quantity of RRC connected users of the first CCC cell is less than a specified threshold, for example, the quantity of RRC connected users of the first CCC cell is less than 600. It should be understood that the RB occupation rate less than 30% and the quantity of RRC connected users less than 600 are merely examples, and should not constitute a limitation on this application.

For example, that the first CCC cell is in a low-load state may alternatively be understood as that load of the first CCC cell is less than that of the BCC cell.

It should be understood that the indication information may carry identification information of a plurality of CCC cells, and the first CCC cell is any one of the plurality of CCC cells. The indication information indicates the terminal device to camp on any one of the plurality of CCC cells.

In this embodiment of this application, when the first CCC cell is in a low-load state, the indication information carries the identification information of the first CCC cell, to indicate the terminal device to camp on the first CCC cell. This can ensure quality of communication between the terminal device and the network device.

Case 3: The broadcast message includes information about the first CCC cell, and the indication information is included in the information about the first CCC cell, that is, the first CCC cell is a CCC cell whose information about the cell carries the indication information in the one or more CCC cells associated with the BCC cell.

In this embodiment of this application, the terminal device may determine, by using the indication information carried in the information about the first CCC cell, that the terminal device can camp on the first CCC cell. It may be understood that the first CCC cell is a cell that is determined by the network device and that is appropriate for the terminal device to camp on. For example, the first CCC cell is in a low-load state, or interference on the first CCC cell is relatively small. The terminal device may more accurately learn of, by including the indication information in the information about the CCC cell, an appropriate cell that can be camped on, so that the terminal device camps on the appropriate cell. This ensures quality of communication between the terminal device and the network device.

For example, the information about the first CCC cell includes an identifier of the first CCC cell and access information of the first CCC cell. The identifier of the first CCC cell may include a physical cell identifier (physical cell identifier, PCI) or a cell identity (cell identity). The identifier of the first CCC cell is used to enable the terminal device to quickly find the first CCC cell. The access information of the first CCC cell includes parameter information of the first CCC cell, the parameter information is used to determine information about a cell selection parameter of the first CCC cell, and the cell selection parameter includes Qᵣₓₗₑᵥₘᵢₙ, Q_{rxlevminoffset}, Q_{qualmin}, and Q_{qualminoffset} of the first CCC cell. The terminal device may determine, based on the cell selection parameter of the first CCC cell and detected signal strength of an SSB of the first CCC cell, whether the first CCC cell satisfies the cell selection criterion.

For example, the access information of the first CCC cell may further include a barring factor for cell access control.

For example, the information about the first CCC cell may further include configuration information of the first CCC cell, for example, time domain and frequency domain positions of a physical downlink control channel (PCCCH) and a physical downlink shared channel (PDSCH), and a root sequence index of a physical random access channel (PRACH).

In this embodiment of this application, the identifier of the first CCC cell is used to enable the terminal device to quickly find the first CCC cell, the access information of the first CCC cell includes the cell selection parameter of the first CCC cell, and the terminal device may determine, based on the cell selection parameter of the first CCC cell, whether the first CCC cell satisfies the cell selection criterion. The information about the first CCC cell includes the identifier of the first CCC cell and the access information of the first CCC cell. The terminal device may quickly find the first CCC cell based on the identifier of the first CCC cell and determine whether the first CCC cell satisfies the cell selection criterion. This improves cell selection efficiency.

For example, the first CCC cell is in a low-load state. For example, that the first CCC cell is in a low-load state may be understood as that load of the first CCC cell is less than that of the BCC cell.

For example, the broadcast message may include information about a plurality of CCC cells associated with the BCC, and the first CCC cell is one CCC cell whose information about the CCC cell carries the indication information in the plurality of CCC cells. For example, the broadcast message may include a plurality of pieces of indication information, the plurality of pieces of indication information may be respectively included in the information about the plurality of CCC cells, the plurality of CCC cells are CCC cells in a low-load state, and the first CCC cell is one of the plurality of CCC cells. The network device indicates, by including the indication information in the information about the plurality of CCCs in a low-load state, the terminal device to camp on any one of the plurality of CCC cells.

In this embodiment of this application, the first CCC cell is in a low-load state, and the network device indicates, by using the indication information carried in the information about the first CCC cell, the terminal device to camp on the first CCC cell. This can ensure quality of communication between the terminal device and the network device.

502: The terminal device determines, based on the indication information and the cell selection criterion, whether to camp on the first CCC cell.

For example, the indication information indicates the terminal device to camp on the first CCC cell, and before camping on the first CCC cell, the terminal device needs to determine whether the first CCC cell satisfies the cell selection criterion. When the first CCC cell satisfies the cell selection criterion, the terminal device may camp on the first CCC cell.

For example, the broadcast message includes the identifier of the first CCC cell and the access information of the first CCC cell, for example, the cell identity and a channel number of the first CCC cell. The terminal device searches for the first CCC cell based on the information about the first CCC cell, for example, searches for, on a channel corresponding to the channel number of the first CCC cell, a cell whose cell identity is the cell identity of the first CCC cell. If the terminal device finds, on the channel, the cell whose cell identity is the cell identity of the first CCC cell, the terminal device determines that the first CCC cell is found.

For example, the terminal device finds the first CCC cell, that is, the terminal device receives a broadcast message that is broadcast by the first CCC cell, for example, a DRS. After receiving the DRS of the first CCC cell, the terminal device determines, based on signal strength of the received DRS, whether the first CCC cell satisfies the cell selection criterion.

In this embodiment of this application, the terminal device may clearly learn, by receiving the broadcast message, that the terminal device can camp on the first CCC cell. This effectively improves a case in which the terminal device camps on another cell such as a BCC cell but the BCC cell is overloaded. Therefore, the terminal device can camp on an appropriate cell. It should be noted that the indication information indicates that the terminal device can camp on the first CCC cell, and whether the terminal device camps on the first CCC cell may be further determined according to the cell selection criterion.

In an implementation, the determining, based on the indication information and the cell selection criterion, whether to camp on the first CCC cell includes the following step:
when the first CCC cell does not satisfy the cell selection criterion, determining not to camp on the first CCC cell; or
when the first CCC cell satisfies the cell selection criterion, determining to camp on the first CCC cell.

For example, the broadcast message includes the identifier of the first CCC cell, and the terminal device searches for the first CCC cell based on the identifier of the first CCC cell, and detects RSRP and RSRQ of the DRS of the first CCC cell. The terminal device determines the cell selection parameter of the first CCC cell based on the access information of the first CCC cell. The terminal device calculates S 1 and S2 of the first CCC cell by using the RSRP and the RSRQ of the first CCC cell and the cell selection parameter of the first CCC cell. If S1 and S2 of the first CCC cell satisfy S 1>0 and S2>0, the terminal device determines that the first CCC cell satisfies the cell selection criterion; or if S 1 and S2 of the first CCC cell do not satisfy S 1>0 and S2>0, the terminal device determines that the first CCC cell does not satisfy the cell selection criterion.

When the first CCC cell satisfies the cell selection criterion, the terminal device determines to camp on the first CCC cell. When the first CCC cell does not satisfy the cell selection criterion, the terminal device determines not to camp on the first CCC cell. This ensures that the terminal device can normally communicate with the network device.

In an implementation, after the determining not to camp on the first CCC cell, the cell selection method further includes the following step:
determining to camp on the BCC cell.

For example, the BCC cell is a BCC cell that is found by the terminal device and that satisfies the cell selection criterion. Therefore, when the first CCC cell does not satisfy the cell selection criterion, the terminal device may select the BCC cell to camp on. In other words, after determining not to camp on the first CCC cell, the terminal device determines to camp on the BCC cell.

It may be understood that, after determining not to camp on the first CCC cell, the terminal device may further search for another CCC cell other than the first CCC cell in the one or more CCC cells, and determine, according to the cell selection criterion, whether to camp on the another CCC cell. When there is one CCC cell that satisfies the cell selection criterion in the one or more CCC cells, the terminal device determines to camp on the CCC cell that satisfies the cell selection criterion. When none of the one or more CCC cells satisfies the cell selection criterion, the terminal device determines to camp on the BCC cell.

In this embodiment of this application, when the BCC cell satisfies the cell selection criterion, and the terminal device determines not to camp on the first CCC cell, the terminal device determines to camp on the BCC cell, to complete a cell selection process. This ensures that the terminal device can normally communicate with the network device.

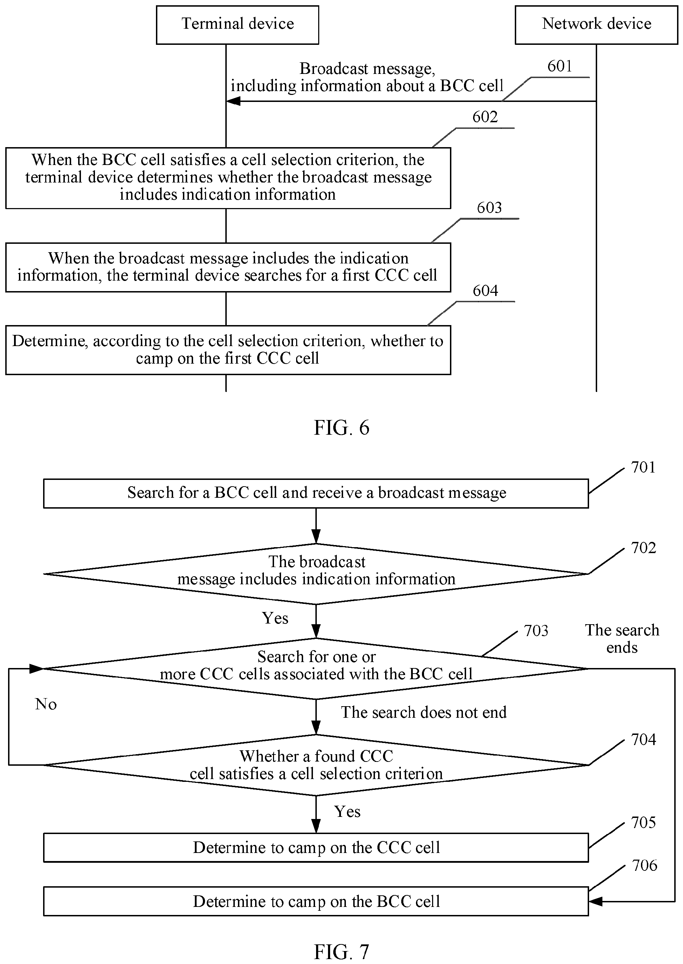

FIG. 6 is a schematic flowchart of another cell selection method according to an embodiment of this application. As shown in FIG. 6, the cell selection method includes but is not limited to the following steps.

601: A terminal device receives a broadcast message sent by a network device.

For example, the broadcast message is broadcast by a BCC cell deployed on the network device. The broadcast message includes information about the BCC cell, the information about the BCC cell includes access information of the BCC cell, and the access information includes a cell selection parameter of the BCC cell. After receiving the broadcast message, the terminal device measures RSRP and RSRQ of the broadcast message, and then calculates S1 and S2 of the BCC cell based on the RSRP and the RSRQ of the broadcast message and the cell selection parameter of the BCC cell. When S1 and S2 of the BCC cell satisfy S1>0 and S2>0, the terminal device determines that the BCC cell satisfies a cell selection criterion.

For example, the BCC cell is a BCC cell that is found by the terminal device on a plurality of frequencies and that satisfies the cell selection criterion. The terminal device searches a plurality of BCC cells on the plurality of frequencies, that is, detects broadcast messages (for example, SSBs or SI) of the plurality of BCC cells on the plurality of frequencies. When the terminal device finds any one of the plurality of BCC cells, that is, the terminal device detects a broadcast message of the BCC cell, the terminal device determines whether the BCC cell satisfies the cell selection criterion. If the BCC cell does not satisfy the cell selection criterion, the terminal device continues to search for a BCC cell that satisfies the cell selection criterion.

602: When the BCC cell satisfies the cell selection criterion, the terminal device determines whether the broadcast message includes indication information.

For example, the indication information indicates the terminal device to camp on a first CCC cell associated with the BCC cell. The first CCC cell is any one of one or more CCC cells associated with the BCC cell.

When the broadcast message does not include the indication information, the terminal device may select the BCC cell to camp on, or may select any one of the one or more CCC cells associated with the BCC cell to camp on. This is not limited in this application.

In an implementation, when the broadcast message does not include the indication information, the terminal device determines a load status of the BCC cell. When the BCC cell is in a low-load state, the terminal device selects the BCC cell to camp on. When the BCC cell is in a high-load state, the terminal device searches the one or more CCC cells based on information about a CCC cell included in the broadcast message. When finding a CCC cell that satisfies the cell selection criterion, the terminal device determines to camp on the CCC cell.

603: When the broadcast message includes the indication information, the terminal device searches for the first CCC cell.

For example, the broadcast message includes information about the first CCC cell, for example, a cell identity and a channel number of the first CCC cell. The terminal device searches for the first CCC cell based on the information about the first CCC cell, for example, searches for, on a channel corresponding to the channel number of the first CCC cell, a cell whose cell identity is the cell identity of the first CCC cell. If the terminal device finds, on the channel, the cell whose cell identity is the cell identity of the first CCC cell, the terminal device determines that the first CCC cell is found.

604: The terminal device determines, according to the cell selection criterion, whether to camp on the first CCC cell.

For example, the terminal device finds the first CCC cell, that is, the terminal device receives a broadcast message that is broadcast by the first CCC cell, for example, a DRS. After receiving the DRS of the first CCC cell, the terminal device measures the DRS of the first CCC cell, to obtain RSRP and RSRQ of the DRS of the first CCC cell.

For example, the information about the first CCC cell further includes access information of the first CCC cell, and the access information includes a cell selection parameter of the first CCC cell. The terminal device calculates S1 and S2 of the first CCC cell based on the RSRP and the RSRQ of the DRS and the cell selection parameter of the first CCC cell. When S1 and S2 of the first CCC cell satisfy S1>0 and S2>0, the terminal device determines that the first CCC cell satisfies the cell selection criterion.

When the first CCC cell satisfies the cell selection criterion, the terminal device determines to camp on the first CCC cell.

When the first CCC cell does not satisfy the cell selection criterion, the terminal device determines not to camp on the first CCC cell. The terminal device searches for another CCC cell other than the first CCC cell in the one or more CCC cells, and determines, according to the cell selection criterion, whether to camp on the another CCC cell.

For example, when none of the one or more CCC cells satisfies the cell selection criterion, the terminal device determines to select the BCC cell to camp on.

In this embodiment of this application, the terminal device determines, by using the received broadcast message, that the terminal device can camp on any one of the one or more CCC cells associated with the BCC cell. The terminal device may search the one or more CCC cells, and select a CCC cell that satisfies the cell selection criterion from the one or more CCC cells to camp on. This reduces load of the BCC cell. When interference on the first CCC cell is relatively small, the indication information indicates the terminal device to camp on the first CCC cell. This can further improve transmission power efficiency.

FIG. 7 is a schematic flowchart of another cell selection method according to an embodiment of this application, which may also be understood as a supplement or a variation of the cell selection method in FIG. 6. As shown in FIG. 7, the cell selection method includes but is not limited to the following steps.

701: Search for a BCC cell and receive a broadcast message.

The BCC cell satisfies a cell selection criterion. For specific descriptions of step 701, refer to the related descriptions of step 601. Details are not described herein again.

702: Determine whether the broadcast message includes indication information; and perform step 703 if the broadcast message includes the indication information.

It may be understood that, for specific descriptions of the indication information, refer to the foregoing descriptions. Details are not described herein again. For example, when the broadcast message does not include the indication information, the terminal device may select the BCC cell to camp on, or may search one or more CCC cells associated with the BCC cell, and select, from the one or more CCC cells, a CCC cell that satisfies the cell selection criterion to camp on. This is not limited in this application.

703: Search the one or more CCC cells associated with the BCC cell; and perform step 706 if the search ends; or perform step 704 if the search does not end.

704: Determine whether a found CCC cell satisfies the cell selection criterion; and perform step 705 if the found CCC cell satisfies the cell selection criterion; or perform step 703 if the found CCC cell does not satisfy the cell selection criterion.

705: Determine to camp on the CCC cell.

706: Determine to camp on the BCC cell.

In this embodiment of this application, the terminal device determines, by using the received broadcast message, that the terminal device can camp on any one of the one or more CCC cells associated with the BCC cell. The terminal device may search the one or more CCC cells, and select a CCC cell that satisfies the cell selection criterion from the one or more CCC cells to camp on. This reduces load of the BCC cell. When interference on the first CCC cell is relatively small, the indication information indicates the terminal device to camp on the first CCC cell. This can further improve transmission power efficiency.

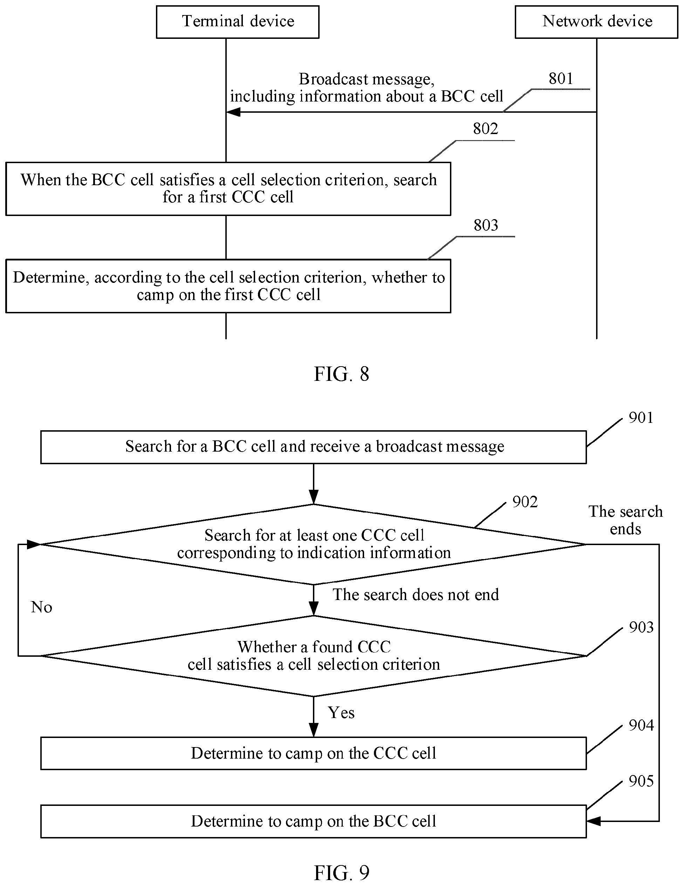

FIG. 8 is a schematic flowchart of another cell selection method according to an embodiment of this application. As shown in FIG. 8, the cell selection method includes but is not limited to the following steps.

801: A terminal device receives a broadcast message sent by a network device.

For example, the broadcast message is broadcast by a BCC cell deployed on the network device. The broadcast message includes information about the BCC cell, the information about the BCC cell includes access information of the BCC cell, and the access information includes a cell selection parameter of the BCC cell. After receiving the broadcast message, the terminal device measures RSRP and RSRQ of the broadcast message, and then calculates S1 and S2 of the BCC cell based on the RSRP and the RSRQ of the broadcast message and the cell selection parameter of the BCC cell. When S1 and S2 of the BCC cell satisfy S1>0 and S2>0, the terminal device determines that the BCC cell satisfies a cell selection criterion.

For example, the BCC cell is a BCC cell that is found by the terminal device on a plurality of frequencies and that satisfies the cell selection criterion. The terminal device searches a plurality of BCC cells on the plurality of frequencies, that is, detects broadcast messages (for example, SSBs or SI) of the plurality of BCC cells on the plurality of frequencies. When the terminal device finds any one of the plurality of BCC cells, that is, the terminal device detects a broadcast message of the BCC cell, the terminal device determines whether the BCC cell satisfies the cell selection criterion. If the BCC cell does not satisfy the cell selection criterion, the terminal device continues to search for a BCC cell that satisfies the cell selection criterion.

802: When the BCC cell satisfies the cell selection criterion, the terminal device searches for a first CCC cell.

For example, the first CCC cell is associated with the BCC cell. The broadcast message further includes information about the first CCC cell, and the information about the first CCC cell includes indication information. The indication information indicates the terminal device to camp on the first CCC cell.

For example, the information about the first CCC cell further includes an identifier of the first CCC cell. The terminal device searches for the first CCC cell based on the identifier of the first CCC cell. For example, the identifier of the first CCC cell includes a cell identity and a channel number of the first CCC cell, and the terminal device searches for, on a channel corresponding to the channel number of the first CCC cell, a cell whose cell identity is the cell identity of the first CCC cell. If the terminal device finds, on the channel, the cell whose cell identity is the cell identity of the first CCC cell, the terminal device determines that the first CCC cell is found.

In an implementation, the first CCC cell is in a low-load state.

For example, that the first CCC cell is in a low-load state may mean a CCC cell whose resource block (resource block, RB) occupation rate of the first CCC cell is less than a specified threshold, for example, an RB occupation rate of the first CCC cell is less than 30%. For example, that the first CCC cell is in a low-load state may alternatively mean that a quantity of RRC connected users of the first CCC cell is less than a specified threshold, for example, the quantity of RRC connected users of the first CCC cell is less than 600.

For example, that the first CCC cell is in a low-load state may be understood as that load of the first CCC cell is less than that of the BCC cell.

For example, the broadcast message may include information about a plurality of CCC cells associated with the BCC, and the first CCC cell is one CCC cell whose information about the CCC cell carries the indication information in the plurality of CCC cells. For example, the broadcast message may include a plurality of pieces of indication information, the plurality of pieces of indication information may be respectively included in the information about the plurality of CCC cells, the plurality of CCC cells are CCC cells in a low-load state, and the first CCC cell is one of the plurality of CCC cells. The network device indicates, by including the indication information in the information about the plurality of CCCs in a low-load state, the terminal device to camp on any one of the plurality of CCC cells.

For example, when the first CCC cell whose information about the CCC cell includes the indication information does not exist in the one or more CCC cells, the terminal device may select the BCC cell to camp on, or may select any one of the one or more CCC cells associated with the BCC cell to camp on. This is not limited in this application.

In an implementation, when the first CCC cell whose information about the CCC cell includes the indication information does not exist in the one or more CCC cells, the terminal device determines a load status of the BCC cell. When the BCC cell is in a low-load state, the terminal device selects the BCC cell to camp on. When the BCC cell is in a high-load state, the terminal device searches the one or more CCC cells based on information about a CCC cell included in the broadcast message. When finding a CCC cell that satisfies the cell selection criterion, the terminal device determines to camp on the CCC cell.

803: The terminal device determines, according to the cell selection criterion, whether to camp on the first CCC cell.

For example, the terminal device finds the first CCC cell, that is, the terminal device receives a broadcast message that is broadcast by the first CCC cell, for example, a DRS. After receiving the DRS of the first CCC cell, the terminal device measures the DRS of the first CCC cell, to obtain RSRP and RSRQ of the DRS of the first CCC cell.

For example, the information about the first CCC cell further includes access information of the first CCC cell. The access information of the first CCC cell includes a cell selection parameter of the first CCC cell. The terminal device calculates S1 and S2 of the first CCC cell based on the RSRP and the RSRQ of the DRS and the cell selection parameter of the first CCC cell. When S1 and S2 of the first CCC cell satisfy S1>0 and S2>0, the terminal device determines that the first CCC cell satisfies the cell selection criterion.

For example, when the first CCC cell satisfies the cell selection criterion, the terminal device determines to camp on the first CCC cell. When the first CCC cell does not satisfy the cell selection criterion, the terminal device determines not to camp on the first CCC cell.

For example, when the terminal device determines not to camp on the first CCC cell, the terminal device searches the one or more CCC cells for a CCC cell whose information about the CCC cell includes the indication information. If a second CCC cell that satisfies the cell selection criterion exists in the CCC cell whose information about the CCC cell includes the indication information, the terminal device determines to camp on the second CCC cell.

For example, when the second cell that satisfies the cell selection criterion does not exist in the CCC cell whose information about the CCC cell includes the indication information, the terminal device may determine to camp on the BCC cell, or may search the one or more CCC cells for a third CCC cell whose information about the CCC cell does not include the indication information, and determine, according to the cell selection criterion, whether to camp on the third CCC cell.

In this embodiment of this application, the terminal device may determine, by using the indication information carried in the information about the first CCC cell, that the terminal device can camp on the first CCC cell. It may be understood that the first CCC cell is a cell that is determined by the network device and that is appropriate for the terminal device to camp on. For example, the first CCC cell is in a low-load state, or interference on the first CCC cell is relatively small. The terminal device may more accurately learn of, by including the indication information in the information about the CCC cell, an appropriate cell that can be camped on, so that the terminal device camps on the appropriate cell. This ensures quality of communication between the terminal device and the network device.

FIG. 9 is a schematic flowchart of another cell selection method according to an embodiment of this application, which may also be understood as a supplement or a variation of the cell selection method in FIG. 8. As shown in FIG. 9, the cell selection method includes but is not limited to the following steps.

901: Search for a BCC cell and receive a broadcast message.

The BCC cell satisfies a cell selection criterion. For specific descriptions of step 901, refer to the related descriptions of step 801. Details are not described herein again.

902: Search for at least one CCC cell corresponding to indication information; and perform step 904 if the search does not end; or perform step 905 if the search ends.

For example, the indication information is included in the broadcast message, and the indication information indicates a terminal device to camp on any one of the at least one CCC cell. The CCC cell is a CCC cell associated with the BCC cell.

In an implementation, the indication information may include identification information of the at least one CCC cell, and the terminal device may determine, by using the identification information of the at least one CCC cell that is included in the indication information, that the terminal device can camp on any one of the at least one CCC cell.

In another implementation, the broadcast message includes information about the at least one CCC cell, and the indication information may include at least one piece of indication information. For example, information about each of the at least one CCC cell may include one piece of indication information. The terminal device determines, by using the indication information carried in the information about the at least one CCC cell, that the terminal device can camp on any one of the at least one CCC cell.

903: Whether a found CCC cell satisfies the cell selection criterion; and perform step 904 if the found CCC cell satisfies the cell selection criterion; or continue to perform step 902 if the found CCC cell does not satisfy the cell selection criterion.

904: Determine to camp on the CCC cell.

905: Determine to camp on the BCC cell.

When completing the search of the at least one CCC cell and determining that none of the at least one CCC cell satisfies the cell selection criterion, the terminal device determines to camp on the BCC cell.

It may be understood that the broadcast message may further include information about a fourth CCC cell, and information about the fourth CCC cell does not include the indication information. When completing the search of the at least one CCC cell and determining that none of the at least one CCC cell satisfies the cell selection criterion, the terminal device may continue to search for the fourth CCC cell, and determine, according to the cell selection criterion, whether to camp on the fourth CCC cell.

It may be understood that the at least one CCC cell is a cell that is determined by a network device and that is appropriate for the terminal device to camp on. For example, the at least one CCC cell is in a low-load state, or interference on the at least one CCC cell is relatively small. In this embodiment of this application, the terminal device may determine, by using the indication information, the at least one CCC cell that can be camped on, and determine, according to the cell selection criterion, whether to camp on the at least one CCC cell, so that the terminal device camps on an appropriate cell. This ensures quality of communication between the terminal device and the network device.

In an energy-saving architecture of a multi-carrier network, system information of a CCC cell is broadcast by a BCC cell associated with the CCC cell. When performing cell reselection, if the terminal device finds a CCC neighboring cell that satisfies a cell reselection criterion, the terminal device cannot directly reselect the CCC neighboring cell, but needs to ensure that a broadcast message of a BCC cell associated with the CCC neighboring cell can be received. When determining that the broadcast message of the BCC cell associated with the CCC neighboring cell can be received, the terminal device determines that the CCC neighboring cell can be reselected. Therefore, after finding a CCC neighboring cell that satisfies the cell reselection criterion, the terminal device needs to further search for a BCC cell associated with the CCC neighboring cell. Embodiments of this application provide cell reselection methods, so that a BCC cell associated with a CCC neighboring cell can be quickly found.

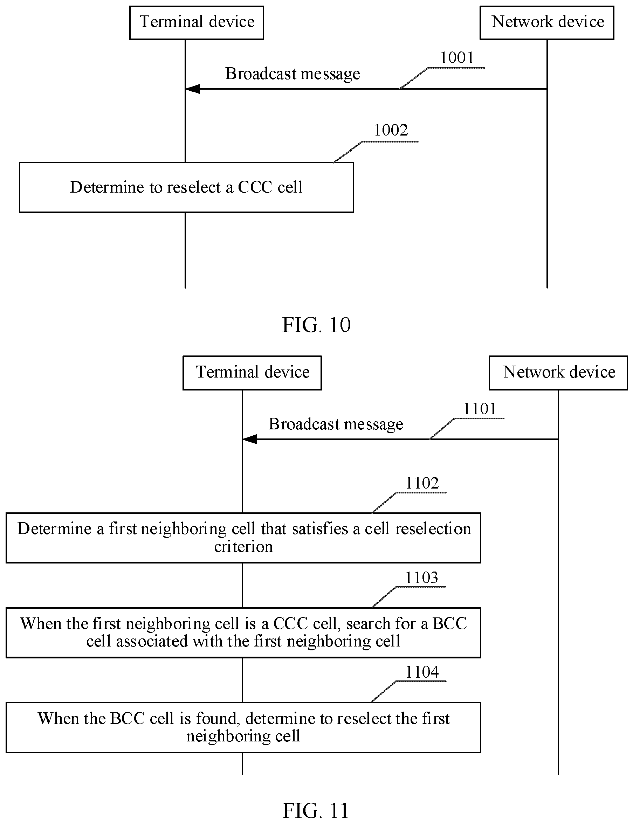

FIG. 10 is a schematic flowchart of a cell reselection method according to an embodiment of this application. As shown in FIG. 10, the cell reselection method includes but is not limited to the following steps.

1001: A terminal device receives a broadcast message sent by a network device, where the broadcast message includes neighboring cell information of a serving cell, and the neighboring cell information includes information about a CCC cell and information about a BCC cell associated with the CCC cell.

For example, the broadcast message is broadcast by a serving cell of the terminal device. The CCC cell is a neighboring cell of the serving cell of the terminal device, and the BCC cell is a BCC cell associated with the CCC cell.

For example, the information about the CCC cell includes an identifier of the CCC cell and a cell reselection parameter of the CCC cell. The identifier of the CCC cell may include a PCI or a cell identity (cell identity) of the CCC cell, and the cell reselection parameter may include Q_{offset}, Q_{offsettemp,n}, Q_{hyst}, and Q_{offsettemp,s}.

For example, the information about the BCC cell includes an identifier of the BCC cell, for example, a PCI or a cell identity of the BCC cell. For example, the information about the BCC cell may further include a channel number of the BCC cell.

1002: The terminal device determines to reselect the CCC cell based on the information about the BCC cell and a cell reselection criterion.

For example, during intra-frequency cell reselection, the cell reselection criterion includes: within a specified time interval, if an R value of an intra-frequency neighboring cell with a largest R value remains greater than an R value of the serving cell, reselecting the intra-frequency neighboring cell with the largest R value.

During equal-priority inter-frequency cell reselection, the cell reselection criterion includes: within a specified time interval, if an R value of an equal-priority inter-frequency neighboring cell with a largest R value remains greater than an R value of the serving cell, reselecting the equal-priority inter-frequency neighboring cell with the largest R value.

During low-priority inter-frequency cell reselection, the cell reselection criterion includes: within a specified time interval, if S 1 of a broadcast message of a low-priority inter-frequency neighboring cell remains greater than a threshold Th_{x,low,p} and S1 of the serving cell is less than a threshold Th_{s,low,p}, or S2 of the broadcast message of the low-priority inter-frequency neighboring cell remains greater than a threshold Th_{x,low,q} and S2 of the serving cell is less than a threshold Th_{s,low,q}, determining to reselect the low-priority inter-frequency neighboring cell.

During high-priority inter-frequency cell reselection, the cell reselection criterion includes: within a specified time interval, if S1 of a broadcast message of a high-priority inter-frequency neighboring cell remains greater than a threshold Th_{x,high,p}, or S2 of the high-priority inter-frequency neighboring cell remains greater than a threshold Th_{x,high,q}, reselecting the high-priority inter-frequency neighboring cell.

It should be noted that the cell reselection criterion is merely an example. With evolution of a standard technology, the cell reselection criterion may change. In this case, the cell reselection criterion is also applicable to the methods provided in embodiments of this application. Therefore, the cell reselection criterion described above should not be understood as a limitation on implementation of this application.

For example, because the CCC cell broadcasts only a DRS, and system information of the CCC cell is broadcast by the BCC cell, to reselect the CCC cell, the terminal device needs to ensure that a broadcast message that is broadcast by the BCC cell can be received. The broadcast message that is broadcast by the BCC cell includes the system information of the CCC cell. The terminal device determines to reselect the CCC cell based on the information about the BCC cell and the cell reselection criterion, whether to reselect the CCC cell.

In an implementation, the determining to reselect the CCC cell based on the information about the BCC cell and a cell reselection criterion includes but is not limited to the following steps:
searching for the CCC cell based on the information about the CCC cell;
when the CCC cell satisfies the cell reselection criterion, searching for the BCC cell based on the information about the BCC cell; and
when the BCC cell is found, determining to reselect the CCC cell.

For example, the information about the CCC cell includes the identifier and a channel number of the CCC cell and the cell reselection parameter of the CCC cell. The terminal device searches for the CCC cell based on the information about the CCC cell, for example, searches for, on a channel corresponding to the channel number of the CCC cell, a cell whose cell identity is the cell identity of the CCC cell. If the terminal device finds, on the channel, the cell whose cell identity is the cell identity of the CCC cell, the terminal device determines that the CCC cell is found.

For example, the terminal device finds the CCC cell, that is, the terminal device receives a broadcast message that is broadcast by the CCC cell, for example, a DRS. After receiving the DRS of the CCC cell, the terminal device measures the DRS of the CCC cell, to obtain RSRP and RSRQ of the DRS of the CCC cell.

The terminal device determines, based on the RSRP and the RSRQ of the DRS of the CCC cell and the cell reselection parameter, whether the CCC cell satisfies the cell reselection criterion.

When the CCC cell satisfies the cell reselection criterion, the terminal device searches for the BCC cell based on the information about the BCC cell.

For example, the information about the BCC cell includes the identifier of the BCC cell and/or the channel number of the BCC cell. The terminal device searches for the BCC cell based on the information about the BCC cell, for example, searches for, on a channel corresponding to the channel number of the BCC cell, a cell whose cell identity is the cell identity of the BCC cell. If the terminal device finds, on the channel, the cell whose cell identity is the cell identity of the BCC cell, the terminal device determines that the BCC cell is found. In this embodiment of this application, the information about the BCC cell includes the identifier of the BCC cell and/or the channel number of the BCC cell, and the terminal device may quickly find the BCC cell based on the identifier of the BCC cell or the channel number of the BCC cell. This reduces time for searching for the BCC cell.

When the terminal device finds the BCC cell, that is, the terminal device receives the broadcast message of the BCC cell, the terminal device determines to reselect the CCC cell. After finding the BCC cell, if the terminal device obtains the system information of the CCC cell from the broadcast message of the BCC cell, the terminal device reselects the CCC cell.

In this embodiment of this application, because the system information of the CCC cell is broadcast by the BCC cell, before determining to reselect the CCC cell, the terminal device needs to determine that the BCC cell is found. The terminal device searches for the CCC cell based on the information about the CCC cell. When the CCC cell satisfies the cell reselection criterion, the terminal device searches for the BCC cell based on the information about the BCC cell. When finding the BCC cell, the terminal device determines to reselect the CCC cell. The terminal device searches for the CCC cell and the BCC cell respectively based on the information about the CCC cell and the information about the BCC cell, so that the CCC cell and the BCC cell can be quickly found. This reduces time for searching for the CCC cell and the BCC, and improves cell reselection efficiency.

In an implementation, the determining to reselect the CCC cell includes the following step:
when reference signal received power RSRP of the BCC cell is greater than a first threshold and reference signal received quality RSRQ of the BCC cell is greater than a second threshold, determining to reselect the CCC cell.

The terminal device finds the BCC cell, that is, the terminal device receives the broadcast message of the BCC cell. For example, the first threshold is a threshold of the RSRP of the broadcast message of the BCC cell, and the second threshold is a threshold of the RSRQ of the broadcast message of the BCC cell. After receiving the broadcast message of the BCC cell, the terminal device measures the broadcast message of the BCC cell, to obtain the RSRP and the RSRQ of the broadcast message of the BCC cell. When the RSRP of the broadcast message of the BCC cell that is received by the terminal device is greater than the first threshold and the RSRQ of the broadcast message of the BCC cell is greater than the second threshold, the terminal device can obtain the system information of the CCC cell from the broadcast message. Therefore, when the reference signal received power RSRP of the broadcast message of the BCC cell is greater than the first threshold and the reference signal received quality RSRQ of the broadcast message of the BCC cell is greater than the second threshold, the terminal device determines to reselect the CCC cell.

For example, when the reference signal received power RSRP of the broadcast message of the BCC cell is greater than the first threshold and the reference signal received quality RSRQ of the broadcast message of the BCC cell is greater than the second threshold, the BCC cell satisfies the cell selection criterion, that is, S1 and S2 of the BCC cell satisfy S1>0 and S2>0. For calculation formulas of S1 and S2 of the BCC cell, refer to the related descriptions in the foregoing cell selection.

For example, the broadcast message of the BCC cell includes a cell reselection parameter of the BCC cell. The first threshold and the second threshold may be determined based on a cell selection parameter of the BCC cell. For example, the first threshold may be a sum of Qᵣₓₗₑᵥₘᵢₙ, Q_{rxlevminoffset}, P_{compensation}, and Q_{offsettemp}, and the second threshold may be a sum of Q_{qualmin}, Q_{qualminoffset}, and Q_{offsettemp}.

In this embodiment of this application, the system information of the CCC cell is broadcast by the BCC cell. When the reference signal received power RSRP of the BCC cell is greater than the first threshold and the reference signal received quality RSRQ of the BCC cell is greater than the second threshold, the terminal device can obtain the system information of the CCC cell from the broadcast message of the BCC cell, and the terminal device determines to reselect the CCC cell. This ensures successful cell reselection.

For example, that the CCC cell satisfies the cell reselection criterion may include the following several cases:

Case 1: When the CCC cell is an intra-frequency neighboring cell of the serving cell, that the CCC cell satisfies the cell reselection criterion includes:

The CCC cell is a cell whose R value is the largest in intra-frequency neighboring cells of the serving cell, and duration in which the R value of the CCC cell is greater than an R value of the serving cell is greater than or equal to first duration.

The R value of the CCC cell is determined based on reference signal received power RSRP of the CCC cell, and the R value of the serving cell is determined based on RSRP of the serving cell.

For example, the first duration may be duration configured by the network device, or may be duration specified in a protocol.

A formula for calculating the R value of the serving cell is as follows: $R = Qs + {Q}_{hyst} - {Q}_{offsettemps}$

Qs is RSRP of an SSB of the serving cell, Q_{hyst} is a hysteresis (hysteresis) of the serving cell, and Q_{offsettemp,s} is an offset of the serving cell. For example, the broadcast message is broadcast by the serving cell, and Qs may be the RSRP of the broadcast message, that is, Qs may be obtained by the terminal device by measuring the broadcast message.

A formula for calculating the R value of the CCC cell is as follows: $R = Qn - {Q}_{offset} - {Q}_{offsettempn}$

Qn is the RSRP of the DRS of the CCC cell, Q_{offset} is an offset of the CCC cell relative to the serving cell, and Q_{offsettemp,n} is an offset of the CCC cell. Q_{offset} and Q_{offsettemp,n} are included in system information of the serving cell.

For example, the broadcast message includes information about a plurality of intra-frequency neighboring cells of the serving cell. The terminal device searches for the plurality of intra-frequency neighboring cells based on the information about the plurality of intra-frequency neighboring cells, and calculates R values of the plurality of intra-frequency neighboring cells according to the formula for calculating the R value of the CCC cell. The CCC cell is a cell with a largest R value in the plurality of intra-frequency neighboring cells.

After obtaining the R value of the CCC cell and the R value of the serving cell through calculation, if the duration in which the R value of the CCC cell is greater than the R value of the serving cell is greater than or equal to the first duration, the terminal device determines that the CCC cell satisfies the cell reselection criterion.

Case 2: When the CCC cell is an equal-priority inter-frequency neighboring cell of the serving cell, that the CCC cell satisfies the cell reselection criterion includes:

The CCC cell is a cell whose R value is the largest in equal-priority inter-frequency neighboring cells of the serving cell, and duration in which the R value of the CCC cell is greater than an R value of the serving cell is greater than or equal to second duration.

The R value of the CCC cell is determined based on reference signal received power RSRP of the CCC cell and an offset of the CCC cell, and the R value of the serving cell is determined based on RSRP of the serving cell, and an offset and a hysteresis of the serving cell.

For example, the second duration may be duration configured by the network device, or may be duration specified in a protocol.

A formula for calculating the R value of the serving cell is as follows: $R = Qs + {Q}_{hyst} - {Q}_{offsettemps}$

Qs is RSRP of an SSB of the serving cell, Q_{hyst} is the hysteresis (hysteresis) of the serving cell, and Q_{offsettemp,s} is the offset of the serving cell. For example, the broadcast message is broadcast by the serving cell, and Qs may be the RSRP of the broadcast message, that is, Qs may be obtained by the terminal device by measuring the broadcast message.

A formula for calculating the R value of the CCC cell is as follows: $R = Qn - {Q}_{offset} - {Q}_{offsettempn}$

Qn is the RSRP of the DRS of the CCC cell, Q_{offset} is an offset of the CCC cell relative to the serving cell, and Q_{offsettemp,n} is the offset of the CCC cell. Q_{offset} and Q_{offsettemp,n} are included in system information of the serving cell.

For example, the broadcast message includes information about a plurality of equal-priority inter-frequency neighboring cells of the serving cell. The terminal device searches for the plurality of equal-priority inter-frequency neighboring cells based on the information about the plurality of equal-priority inter-frequency neighboring cells, and calculates R values of the plurality of equal-priority inter-frequency neighboring cells according to the formula for calculating the R value of the CCC cell. The CCC cell is a cell with a largest R value in the plurality of equal-priority inter-frequency neighboring cells.

After obtaining the R value of the CCC cell and the R value of the serving cell through calculation, if the duration in which the R value of the CCC cell is greater than the R value of the serving cell is greater than the second duration, the terminal device determines that the CCC cell satisfies the cell reselection criterion.

Case 3: When the CCC cell is a low-priority inter-frequency neighboring cell of the serving cell, that the CCC cell satisfies the cell reselection criterion includes:
Duration in which RSRP of the CCC cell is greater than a third threshold and RSRP of the serving cell is less than a fourth threshold is greater than or equal to third duration.

Alternatively, duration in which reference signal received quality RSRQ of the CCC cell is greater than a fifth threshold and RSRQ of the serving cell is less than a sixth threshold is greater than or equal to fourth duration.

For example, the third duration may be duration configured by the network device, or may be duration specified in a protocol; and the fourth duration may be duration configured by the network device, or may be duration specified in a protocol. For example, the third duration may be equal to the fourth duration.

The third threshold is a cell reselection threshold of RSRP of the broadcast message (for example, the DRS) of the CCC cell. The fourth threshold is a cell reselection threshold of RSRP of a broadcast message (for example, a DRS or an SSB) of the serving cell. In a third time period, if the RSRP of the DRS of the CCC cell remains greater than the third threshold and the RSRP of the broadcast message of the serving cell remains less than the fourth threshold, the terminal device determines that the CCC cell satisfies the cell reselection criterion. The third time period is greater than or equal to the third duration. For example, a start moment of the third time period may be a moment at which the terminal device finds the CCC cell.

The fifth threshold is a cell reselection threshold of RSRQ of the broadcast message (for example, the DRS) of the CCC cell. The sixth threshold is a cell reselection threshold of RSRQ of the broadcast message (for example, the DRS or the SSB) of the serving cell. In a fourth time period, if the RSRQ of the DRS of the CCC cell remains greater than the fifth threshold and the RSRQ of the broadcast message of the serving cell remains less than the sixth threshold, the terminal device determines that the CCC cell satisfies the cell reselection criterion. For example, the fourth time period is greater than or equal to the fourth duration. For example, a start moment of the fourth time period may be a moment at which the terminal device finds the CCC cell.

For example, when the CCC cell satisfies the cell reselection criterion, the CCC cell satisfies at least one of the following two conditions:
Condition 1: S1 of the serving cell is less than Th_{s,low,p}, and S1 of the CCC cell remains greater than Th_{x,low,p} in the third time period.
Condition 2: S2 of the serving cell is less than Th_{s,low,q}, and S2 of the CCC cell remains greater than Th_{x,low,q} in the fourth time period.

For calculation formulas of S1 of the serving cell, S1 of the CCC cell, S2 of the serving cell, and S2 of the CCC cell, refer to the related descriptions in the foregoing cell selection. Th_{s,low,p}, Th_{x,low,p}, Th_{s,low,q}, and Th_{x,low,q} represent corresponding thresholds, and these parameters may be included in the foregoing broadcast message.

For example, the third threshold may be determined based on the cell reselection parameter of the CCC cell. The cell reselection parameter of the CCC cell is included in the information about the CCC cell, and the cell reselection parameter of the CCC cell includes Qᵣₓₗₑᵥₘᵢₙ, Q_{rxlevminoffset}, P_{compensation}, Q_{offsettemp}, and Th_{x,low,p}. S 1 of the CCC cell is greater than Th_{x,low,p}, that is, the RSRP of the CCC cell is greater than a sum of Qᵣₓₗₑᵥₘᵢₙ, Q_{rxlevminoffset}, P_{compensation}, Q_{offsettemp}, and Th_{x,low,p} of the CCC cell, and the third threshold may be the sum of Qᵣₓₗₑᵥₘᵢₙ, Q_{rxlevminoffset}, P_{compensation}, Q_{offsettemp}, and Th_{x,low,p}.

For example, the fourth threshold may be determined based on a cell selection parameter of the serving cell. A cell reselection parameter of the serving cell may be included in the foregoing broadcast message. The cell reselection parameter of the serving cell includes Qᵣₓₗₑᵥₘᵢₙ, Q_{rxlevminoffset}, P_{compensation}, Q_{offsettemp}, and Th_{s,low,p}. S 1 of the serving cell is less than Th_{s,low,p}, that is, the RSRP of the serving cell is less than Qᵣₓₗₑᵥₘᵢₙ, Q_{rxlevminoffset}, P_{compensation}, Q_{offsettemp}, and Th_{s,low,p} of the serving cell. The fourth threshold may be a sum of Qᵣₓₗₑᵥₘᵢₙ, Q_{rxlevminoffset}, P_{compensation}, Q_{offsettemp}, and Th_{s,low,p} of the serving cell.

For example, the fifth threshold may be determined based on the cell reselection parameter of the CCC cell. The cell reselection parameter of the CCC cell may further include Q_{qualmin}, Q_{qualminoffset}, Q_{offsettemp}, and Th_{x,low,q} of the CCC cell. S2 of the CCC cell is greater than Th_{x,low,q} in the fourth time period, that is, in the fourth time period, the RSRQ of the CCC cell is greater than a sum of Q_{qualmin}, Q_{qualminoffset}, Q_{offsettemp}, and Th_{x,low,q}. The fifth threshold may be the sum of Q_{qualmin}, Q_{qualminoffset}, Q_{offsettemp}, and Th_{x,low,q}.

For example, the sixth threshold may be determined based on the cell reselection parameter of the serving cell, and the cell reselection parameter of the serving cell may further include Q_{qualmin}, Q_{qualminoffset}, Q_{offsettemp}, and Th_{s,low,q} of the serving cell. S2 of the serving cell is less than Th_{s,low,q}, that is, the RSRQ of the serving cell is less than a sum of Q_{qualmin}, Q_{qualminoffset}, Q_{offsettemp}, and Th_{s,low,q}. The sixth threshold may be the sum of Q_{qualmin}, Q_{qualminoffset}, Q_{offsettemp}, and Th_{s,low,q}.

Case 4: When the CCC cell is a high-priority inter-frequency neighboring cell of the serving cell, that the CCC cell satisfies the cell reselection criterion includes:
Duration in which RSRP of the CCC cell is greater than a seventh threshold is greater than or equal to fifth duration.

Alternatively, duration in which RSRQ of the CCC cell is greater than an eighth threshold is greater than or equal to sixth duration.

For example, the fifth duration may be duration configured by the network device, or may be duration specified in a protocol; and the sixth duration may be duration configured by the network device, or may be duration specified in a protocol.

The seventh threshold is a threshold of the RSRP of the DRS of the CCC cell. When the CCC cell is a high-priority inter-frequency neighboring cell of the serving cell, if the RSRP of the CCC cell remains greater than the seventh threshold in a fifth time period, the terminal device determines that the CCC cell satisfies the cell reselection criterion. For example, the fifth time period is greater than or equal to the fifth duration. For example, a start moment of the fifth time period may be a moment at which the terminal device finds the CCC cell.

The eighth threshold is a threshold of the RSRQ of the DRS of the CCC cell. When the CCC cell is a high-priority inter-frequency neighboring cell of the serving cell, if the RSRQ of the CCC cell remains greater than the eighth threshold in a sixth time period, the terminal device determines that the CCC cell satisfies the cell reselection criterion. For example, the sixth time period is greater than or equal to the sixth duration. For example, a start moment of the sixth time period may be a moment at which the terminal device finds the CCC cell.

For example, when the CCC cell satisfies the cell reselection criterion, the CCC cell satisfies one of the following conditions:
Condition 1: S1 of the CCC cell remains greater than Th_{x,high,p} in the fifth time period.
Condition 2: S2 of the CCC cell remains greater than Th_{x,high,q} in the sixth time period.

For example, the seventh threshold may be determined based on the cell reselection parameter of the CCC cell. The cell reselection parameter of the CCC cell is included in the information about the CCC cell, and the cell reselection parameter of the CCC cell includes Qᵣₓₗₑᵥₘᵢₙ, Q_{rxlevminoffset}, P_{compensation}, Q_{offsettemp}, and Th_{x,high,p}. S1 of the CCC cell remains greater than Th_{x,high,p} in the fifth time period, that is, in the fifth time period, the RSRP of the CCC cell is greater than a sum of Qᵣₓₗₑᵥₘᵢₙ, Q_{rxlevminoffset}, P_{compensation}, Q_{offsettemp}, and Th_{x,high,p} of the CCC cell. The seventh threshold may be the sum of Qᵣₓₗₑᵥₘᵢₙ, Q_{rxlevminoffset}, P_{compensation}, Q_{offsettemp}, and Th_{x,high,p}.

For example, the eighth threshold may be determined based on the cell reselection parameter of the CCC cell. The cell reselection parameter of the CCC cell may further include Q_{qualmin}, Q_{qualminoffset}, Q_{offsettemp}, and Th_{x,high,q} of the CCC cell. S2 of the CCC cell is greater than Th_{x,high,q} in the sixth time period, that is, in the sixth time period, the RSRQ of the CCC cell is greater than a sum of Q_{qualmin}, Q_{qualminoffset}, Q_{offsettemp}, and Th_{x,high,q}. The fifth threshold may be the sum of Q_{qualmin}, Q_{qualminoffset}, Q_{offsettemp}, and Th_{x,high,q}.

In this embodiment of this application, the broadcast message includes the neighboring cell information of the serving cell, the neighboring cell information includes the information about the CCC cell and the information about the BCC cell associated with the CCC cell, and the CCC cell is a neighboring cell of the serving cell. The terminal device may quickly determine, based on the information about the BCC cell, the BCC cell associated with the CCC cell. This improves cell reselection efficiency.

FIG. 11 is a schematic flowchart of another cell reselection method according to an embodiment of this application. As shown in FIG. 11, the cell reselection method includes but is not limited to the following steps.

1101: A terminal device receives a broadcast message sent by a network device, where the broadcast message includes neighboring cell information of a serving cell.

For example, the broadcast message is broadcast by a serving cell of the terminal device. The neighboring cell information includes information about at least one neighboring cell of the serving cell. The terminal device may search for and measure the at least one neighboring cell based on the information about the at least one neighboring cell, to perform cell reselection.

1102: Determine a first neighboring cell that satisfies a cell reselection criterion.

For example, for the cell reselection criterion, refer to the related descriptions in FIG. 10.

For example, the first neighboring cell is a neighboring cell that satisfies the cell reselection criterion in the at least one neighboring cell. Information about any neighboring cell in the at least one neighboring cells includes a cell identity of the neighboring cell and a cell reselection parameter of the neighboring cell. The terminal device searches for and measures the neighboring cell based on an identifier of each of the at least one neighboring cell, and determines, based on the cell reselection parameter of the neighboring cell, whether the neighboring cell satisfies the cell reselection criterion.

For example, for the first neighboring cell that satisfies the cell reselection criterion, refer to the related descriptions of the CCC cell that satisfies the cell reselection criterion in FIG. 10.

1103: When the first neighboring cell is a CCC cell, search for a BCC cell associated with the first neighboring cell.

For example, when the first neighboring cell is a CCC cell, the terminal device needs to determine that a broadcast message of the BCC cell associated with the first neighboring cell can be received, to obtain system information of the first neighboring cell. Therefore, when the first neighboring cell is a CCC cell, the terminal device searches for the BCC cell based on information about the BCC cell. When receiving the broadcast message of the BCC cell and obtaining the system information of the first neighboring cell from the broadcast message of the BCC cell, the terminal device determines to reselect the first neighboring cell.

For example, when the first neighboring cell is a CCC cell, information about the first neighboring cell further includes the information about the BCC cell associated with the first neighboring cell. The terminal device searches for the BCC cell based on the information about the BCC cell.

For example, the information about the BCC cell includes an identifier and a channel number of the BCC cell and a cell reselection parameter of the CCC cell. The terminal device searches for the BCC cell based on the information about the BCC cell, for example, searches for, on a channel corresponding to the channel number of the BCC cell, a cell whose cell identity is a cell identity of the BCC cell. If the terminal device finds, on the channel, the cell whose cell identity is the cell identity of the BCC cell, the terminal device determines that the BCC cell is found.

In an implementation, when reference signal received power RSRP of the BCC cell is greater than a ninth threshold and reference signal received quality RSRQ of the BCC cell is greater than a tenth threshold, the terminal device determines that the BCC cell is found.

For example, the ninth threshold is a threshold of the RSRP of the broadcast message of the BCC cell, and the tenth threshold is a threshold of the RSRQ of the broadcast message of the BCC cell. After receiving the broadcast message of the BCC cell, the terminal device measures the broadcast message of the BCC cell, to obtain the RSRP and the RSRQ of the broadcast message of the BCC cell. When the RSRP of the broadcast message of the BCC cell that is received by the terminal device is greater than the ninth threshold and the RSRQ of the broadcast message of the BCC cell is greater than the tenth threshold, the terminal device can obtain the system information of the first neighboring cell from the broadcast message of the BCC cell. Therefore, when the reference signal received power RSRP of the broadcast message of the BCC cell is greater than the ninth threshold and the reference signal received quality RSRQ of the broadcast message of the BCC cell is greater than the tenth threshold, the terminal device determines that the BCC cell is found.

For example, when the reference signal received power RSRP of the broadcast message of the BCC cell is greater than the ninth threshold and the reference signal received quality RSRQ of the broadcast message of the BCC cell is greater than the tenth threshold, the BCC cell satisfies a cell selection criterion, that is, S1 and S2 of the BCC cell satisfy S1>0 and S2>0. For calculation formulas of S1 and S2 of the BCC cell, refer to the related descriptions in the foregoing cell selection.

For example, the broadcast message of the BCC cell includes a cell reselection parameter of the BCC cell. The ninth threshold and the tenth threshold may be determined based on a cell selection parameter of the BCC cell. For example, the ninth threshold may be a sum of Qᵣₓₗₑᵥₘᵢₙ, Q_{rxlevminoffset}, P_{compensation}, and Q_{offsettemp}, and the tenth threshold may be a sum of Q_{qualmin}, Q_{qualminoffset}, and Q_{offsettemp}.

1104: When the BCC cell is found, determine to reselect the first neighboring cell.

For example, after finding the BCC cell, that is, after receiving the broadcast message of the BCC cell, the terminal device obtains the system information of the first neighboring cell from the broadcast message of the BCC cell, and determines to reselect the first neighboring cell.

For example, before determining to reselect the first neighboring cell, the terminal device further needs to determine that the first neighboring cell satisfies a network homing criterion and a cell availability criterion. When determining that the first neighboring cell satisfies the network homing criterion and the cell availability criterion, the terminal device determines to reselect the first neighboring cell.

When the terminal device cannot find the BCC cell or cannot obtain the system information of the first neighboring cell from the broadcast message of the BCC cell, the terminal device determines not to reselect the first neighboring cell.

For example, when the first neighboring cell is not a CCC cell, the terminal device determines to reselect the first neighboring cell. When the first neighboring cell is not a CCC cell, the system information of the first neighboring cell is broadcast by the first neighboring cell, so that the terminal device can directly reselect the first neighboring cell.

In this embodiment of this application, the broadcast message includes information about a plurality of neighboring cells of the serving cell. The terminal device searches for and measures the neighboring cells of the serving cell, and determines, from the plurality of neighboring cells, the first neighboring cell that satisfies the cell reselection criterion. When the first neighboring cell is a CCC cell, the information about the first neighboring cell includes the information about the BCC cell associated with the first neighboring cell. The terminal device may quickly determine, based on the information about the BCC cell, the BCC cell associated with the first neighboring cell. This reduces time for searching for the BCC cell, and improves cell reselection efficiency.

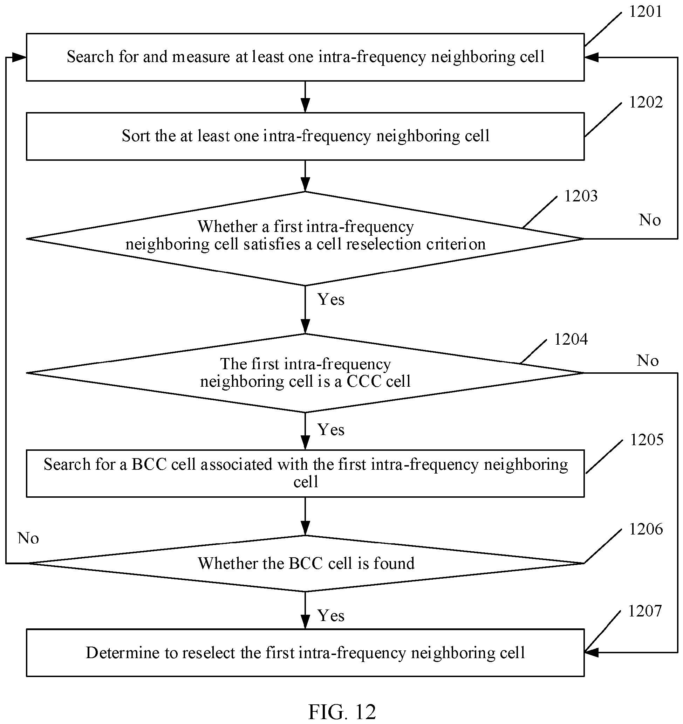

FIG. 12 is a schematic flowchart of another cell reselection method according to an embodiment of this application, which may also be understood as a supplement or a variation of the cell reselection method in FIG. 11. The cell reselection method may be applied to an intra-frequency cell reselection process. As shown in FIG. 12, the cell reselection method includes but is not limited to the following steps.

1201: Search for and measure at least one intra-frequency neighboring cell.

For example, the at least one intra-frequency neighboring cell is an intra-frequency neighboring cell of a serving cell of a terminal device. The terminal device may receive a broadcast message of the serving cell. The broadcast message carries information about the at least one intra-frequency neighboring cell. The terminal device searches for the at least one intra-frequency neighboring cell based on the information about the at least one intra-frequency neighboring cell. For each found intra-frequency neighboring cell, the terminal device measures signal strength of the intra-frequency neighboring cell, for example, measures RSRP and RSRQ of a broadcast message of the intra-frequency neighboring cell.

1202: Sort the at least one intra-frequency neighboring cell.

For example, the terminal device sorts the at least one intra-frequency neighboring cell based on a cell reselection priority.

For example, the cell reselection priority may be represented by an R value of a cell. The terminal device searches for the at least one intra-frequency neighboring cell, and calculates an R value of each intra-frequency neighboring cell. For calculation of the R value of the intra-frequency neighboring cell, refer to the foregoing descriptions. Details are not described herein again.

After calculating the R value of each intra-frequency neighboring cell, the terminal device sorts the at least one intra-frequency neighboring cell based on the R value.

1203: Whether a first intra-frequency neighboring cell satisfies a cell reselection criterion; and perform step 1204 if the first intra-frequency neighboring cell satisfies the cell reselection criterion; or continue to perform step 1201 if the first intra-frequency neighboring cell does not satisfy the cell reselection criterion.

The first intra-frequency neighboring cell is an intra-frequency neighboring cell with a largest R value in the at least one intra-frequency neighboring cell. For the cell reselection criterion, refer to the foregoing related descriptions. Details are not described herein again.

1204: The first intra-frequency neighboring cell is a CCC cell; and perform step 1205 if the first intra-frequency neighboring cell is a CCC cell; or perform step 1207 if the first intra-frequency neighboring cell is not a CCC cell.

1205: Search for a BCC cell associated with the first intra-frequency neighboring cell.

Information about the first intra-frequency neighboring cell includes information about the BCC cell associated with the first intra-frequency neighboring cell. The terminal device searches for the BCC cell based on the information about the BCC cell.

1206: Whether the BCC cell is found; and perform step 1207 if the BCC cell is found; or continue to perform step 1201 if the BCC cell is not found.

1207: Determine to reselect the first intra-frequency neighboring cell.

For specific descriptions of the steps in FIG. 12, refer to the related descriptions in FIG. 10 and FIG. 11. Details are not described herein again.

In this embodiment of this application, when the first intra-frequency neighboring cell is a CCC cell, the information about the first intra-frequency neighboring cell includes the information about the BCC cell associated with the first intra-frequency neighboring cell. The terminal device may quickly determine, based on the information about the BCC cell, the BCC cell associated with the first intra-frequency neighboring cell. This reduces time for searching for the BCC cell, and improves cell reselection efficiency.

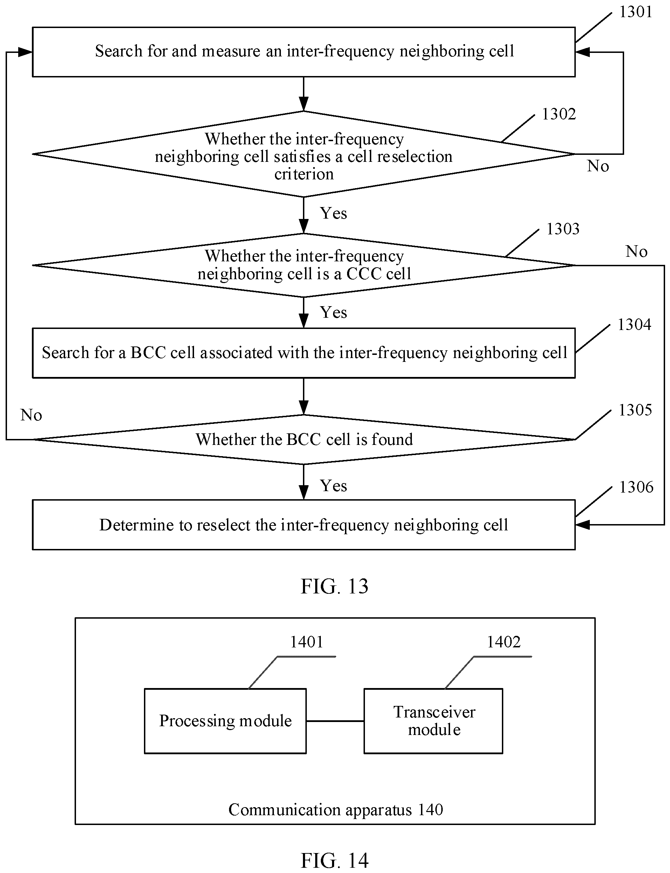

FIG. 13 is a schematic flowchart of another cell reselection method according to an embodiment of this application, which may also be understood as a supplement or a variation of the cell reselection method in FIG. 11. The cell reselection method may be applied to an inter-frequency cell reselection process. As shown in FIG. 13, the cell reselection method includes but is not limited to the following steps.

1301: Search for and measure an inter-frequency neighboring cell.

For example, the inter-frequency neighboring cell is an inter-frequency neighboring cell of a serving cell. A message that is broadcast by the serving cell includes information about the inter-frequency neighboring cell, and a terminal device may obtain the information about the inter-frequency neighboring cell by using the broadcast message that is broadcast by the serving cell.

1302: Whether the inter-frequency neighboring cell satisfies a cell reselection criterion; and perform step 1303 if the inter-frequency neighboring cell satisfies the cell reselection criterion; or continue to perform step 1301 if the inter-frequency neighboring cell does not satisfy the cell reselection criterion.

1303: Whether the inter-frequency neighboring cell is a CCC cell; and perform step 1304 if the inter-frequency neighboring cell is a CCC cell; or perform step 1306 if the inter-frequency neighboring cell is not a CCC cell.

1304: Search for a BCC cell associated with the inter-frequency neighboring cell.

For example, when the inter-frequency neighboring cell is a CCC cell, the information about the inter-frequency neighboring cell includes information about the BCC cell. The terminal device may quickly search for the BCC cell based on the information about the BCC cell.

1305: Whether the BCC cell is found; and perform step 1306 if the BCC cell is found; or continue to perform step 1301 if the BCC cell is not found.

1306: Determine to reselect the inter-frequency neighboring cell.

For specific descriptions of the steps in FIG. 13, refer to the related descriptions in FIG. 10 and FIG. 11. Details are not described herein again.

In this embodiment of this application, when the inter-frequency neighboring cell is a CCC cell, the information about the inter-frequency neighboring cell includes the information about the BCC cell associated with the inter-frequency neighboring cell. The terminal device may quickly determine, based on the information about the BCC cell, the BCC cell associated with the inter-frequency neighboring cell. This reduces time for searching for the BCC cell, and improves cell reselection efficiency.

The methods in embodiments of this application are described in detail above. Apparatuses in embodiments of this application are provided below.

In this application, the communication apparatus is divided into function modules based on the foregoing method embodiments. For example, each function module corresponding to each function may be obtained through division, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes in detail communication apparatuses in embodiments of this application with reference to FIG. 14 to FIG. 16.

FIG. 14 is a diagram of a structure of a communication apparatus according to an embodiment of this application. As shown in FIG. 14, the communication apparatus 140 includes a processing module 1401 and a transceiver module 1402.

In some embodiments of this application, the communication apparatus may be the terminal device described above. In other words, the communication apparatus shown in FIG. 14 may be configured to perform the steps, functions, or the like performed by the terminal device in the foregoing method embodiments.

In an implementation, the transceiver module 1402 is configured to receive a broadcast message, where the broadcast message includes indication information, the indication information indicates to camp on a first CCC cell, the first CCC cell is a CCC cell associated with a BCC cell, and the BCC cell is a BCC cell that is found by a terminal device and that satisfies a cell selection criterion.

The processing module 1401 is configured to determine, based on the indication information and the cell selection criterion, whether to camp on the first CCC cell.

Optionally, the processing module 1401 is specifically configured to: when the first CCC cell does not satisfy the cell selection criterion, determine not to camp on the first CCC cell; or when the first CCC cell satisfies the cell selection criterion, determine to camp on the first CCC cell.

Optionally, the processing module 1401 is further configured to: when determining not to camp on the first CCC cell, determine to camp on the BCC cell.

Optionally, the transceiver module 1402 is specifically configured to receive the broadcast message when the BCC cell is in a high-load state.

It may be understood that, for specific descriptions of the broadcast message, the indication message, the cell selection criterion, the first CCC cell, the BCC cell, and the like, refer to the foregoing method embodiments, for example, the methods shown in FIG. 5, FIG. 6, FIG. 7, FIG. 8, and FIG. 9. Details are not described herein again.

In another implementation, the transceiver module 1402 is configured to receive a broadcast message, where the broadcast message includes neighboring cell information of a serving cell, and the neighboring cell information includes information about a CCC cell and information about a BCC cell associated with the CCC cell.

The processing module 1401 is configured to determine to reselect the CCC cell based on the information about the BCC cell and a cell reselection criterion.

Optionally, the processing module 1401 is specifically configured to: search for the CCC cell based on the information about the CCC cell; when the CCC cell satisfies the cell reselection criterion, search for the BCC cell based on the information about the BCC cell; and when finding the BCC cell, determine to reselect the CCC cell.

It may be understood that, for specific descriptions of the broadcast message, the neighboring cell information, the cell reselection criterion, the CCC cell, the BCC cell, and the like, refer to the foregoing method embodiments, for example, the methods shown in FIG. 10, FIG. 11, FIG. 12, and FIG. 13. Details are not described herein again.

It may be understood that specific descriptions of the transceiver module and the processing module in embodiments of this application are merely examples. For specific functions or steps performed by the transceiver module and the processing module, refer to the foregoing method embodiments. Details are not described herein again. For example, the transceiver module 1402 may be further configured to perform step 501, step 601, step 701, step 801, step 901, step 1001, and step 1101, and the processing module 1401 may be further configured to perform step 502, step 602, step 603, step 604, step 702, step 703, step 704, step 705, step 706, step 802, step 803, step 902, step 903, step 904, step 905, step 1002, step 1102, step 1103, and step 1104.

The foregoing describes the communication apparatus in this embodiment of this application. The following describes a possible product form of the communication apparatus. It should be understood that a product in any form having the functions of the communication apparatus described in FIG. 14 falls within the protection scope of embodiments of this application. It should be further understood that the following description is merely an example, and does not limit a product form of the communication apparatus in embodiments of this application.

In the communication apparatus shown in FIG. 14, the processing module 1401 may be one or more processors, and the transceiver module 1402 may be a transceiver. Alternatively, the processing module 1401 may be one or more processors (or the processing module 1401 may be one or more logic circuits), and the transceiver module 1402 may be an input/output interface. Details are as follows.

In a possible implementation, in the communication apparatus shown in FIG. 14, the processing module 1401 may be one or more processors, and the transceiver module 1402 may be a transceiver. In this embodiment of this application, the processor and the transceiver may be coupled, or the like. A manner of connecting the processor and the transceiver is not limited in this embodiment of this application.

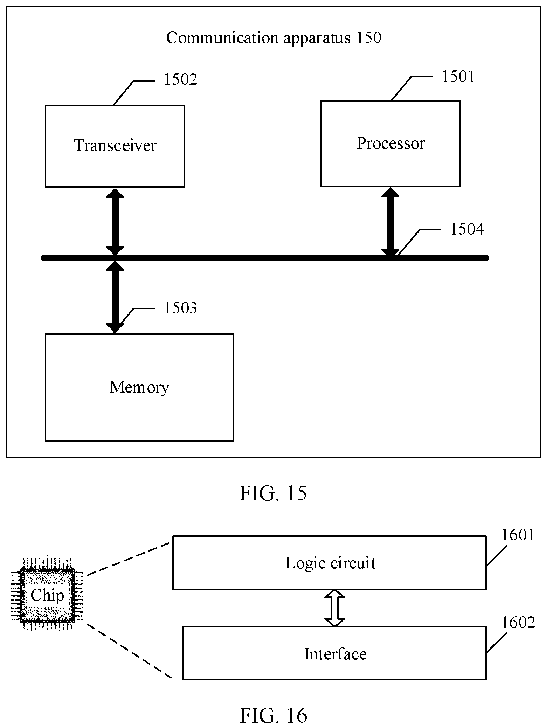

As shown in FIG. 15, the communication apparatus 150 includes one or more processors 1501 and a transceiver 1502.

In an implementation, when the communication apparatus is configured to perform the steps, the methods, or the functions performed by the terminal device, the transceiver 1502 is configured to receive a broadcast message. The processor 1501 is configured to determine, based on indication information included in the broadcast message and a cell selection criterion, whether to camp on a first CCC cell.

It may be understood that, for specific descriptions of the broadcast message, the indication information, the cell selection criterion, the first CCC cell, and the like, refer to the foregoing method embodiments, for example, the methods shown in FIG. 5, FIG. 6, FIG. 7, FIG. 8, and FIG. 9. Details are not described herein again.

In another implementation, when the communication apparatus is configured to perform the steps, the methods, or the functions performed by the terminal device, the transceiver 1502 is configured to receive a broadcast message, and the processor 1501 is configured to determine to reselect a CCC cell based on the broadcast message.

It may be understood that, for specific descriptions of the broadcast message and the CCC cell, refer to the foregoing method embodiments, for example, the methods shown in FIG. 10, FIG. 11, FIG. 12, and FIG. 13. Details are not described herein again.

It may be understood that, for specific descriptions of the processor and the transceiver, refer to the descriptions of the processing module and the transceiver module shown in FIG. 14. Details are not described herein again.

In various implementations of the communication apparatus shown in FIG. 15, the transceiver may include a receiver and a transmitter. The receiver is configured to perform the receiving function (or operation). The transmitter is configured to perform the transmitting function (or operation). The transceiver is configured to communicate with another device/apparatus through a transmission medium.

Optionally, the communication apparatus 150 may further include one or more memories 1503, configured to store program instructions and/or data. The memory 1503 is coupled to the processor 1501. The coupling in this embodiment of this application may be an indirect coupling or a communication connection between apparatuses, units, or modules in an electrical form, a mechanical form, or another form, and is used for information exchange between the apparatuses, the units, or the modules. The processor 1501 may cooperate with the memory 1503. The processor 1501 may execute the program instructions stored in the memory 1503. Optionally, at least one of the one or more memories may be included in the processor.

A specific connection medium between the transceiver 1502, the processor 1501, and the memory 1503 is not limited in this embodiment of this application. In this embodiment of this application, the memory 1503, the processor 1501, and the transceiver 1502 are connected through a bus 1504 in FIG. 15. The bus is represented by using a bold line in FIG. 15. A manner of a connection between other components is merely an example for description, and is not limited thereto. The bus may be classified into an address bus, a data bus, a control bus, and the like. For ease of representation, only one bold line represents the bus in FIG. 15, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module, or the like.

In embodiments of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a Compact Disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 1501 is mainly configured to: process a communication protocol and communication data, control the entire communication apparatus, execute a software program, and process data of the software program. The memory 1503 is mainly configured to store a software program and data. The transceiver 1502 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data that is input by a user and output data to the user.

After the communication apparatus is powered on, the processor 1501 may read the software program in the memory 1503, interpret and execute instructions of the software program, and process data of the software program. When data needs to be sent wirelessly, the processor 1501 performs baseband processing on the to-be-sent data, and then outputs a baseband signal to a radio frequency circuit; and the radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1501; and the processor 1501 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may alternatively include more components than those shown in FIG. 15, or the like. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 14, the processing module 1401 may be one or more logic circuits, and the transceiver module 1402 may be an input/output interface. The input/output interface is also referred to as a communication interface, an interface circuit, an interface, or the like. As shown in FIG. 16, the communication apparatus shown in FIG. 16 includes a logic circuit 1601 and an interface 1602. In other words, the processing module 1401 may be implemented by using the logic circuit 1601, and the transceiver module 1402 may be implemented by using the interface 1602. The logic circuit 1601 may be a chip, a processing circuit, an integrated circuit, a system-on-a-chip (system-on-a-chip, SoC), or the like. The interface 1602 may be a communication interface, an input/output interface, a pin, or the like. For example, FIG. 16 shows an example in which the communication apparatus is a chip. The chip includes a logic circuit 1601 and an interface 1602.

In this embodiment of this application, the logic circuit and the interface may be further coupled to each other. A specific manner of connection between the logical circuit and the interface is not limited in this embodiment of this application.

In an implementation, when the communication apparatus is configured to perform the methods, the functions, or the steps performed by the terminal device, the interface 1602 is configured to receive a broadcast message. The logic circuit 1601 is configured to determine, based on indication information included in the broadcast message and a cell selection criterion, whether to camp on a first CCC cell.

It may be understood that, for specific descriptions of the broadcast message, the indication information, the cell selection criterion, the first CCC cell, and the like, refer to the foregoing method embodiments, for example, the methods shown in FIG. 5, FIG. 6, FIG. 7, FIG. 8, and FIG. 9. Details are not described herein again.

In another implementation, when the communication apparatus is configured to perform the methods, the functions, or the steps performed by the terminal device, the interface 1602 is configured to receive a broadcast message. The logic circuit 1601 is configured to determine to reselect a CCC cell based on the broadcast message.

It may be understood that, for specific descriptions of the broadcast message and the CCC cell, refer to the foregoing method embodiments, for example, the methods shown in FIG. 10, FIG. 11, FIG. 12, and FIG. 13. Details are not described herein again.

It may be understood that the communication apparatus shown in embodiments of this application may implement the method provided in embodiments of this application in a form of hardware, or may implement the method provided in embodiments of this application in a form of software. This is not limited in embodiments of this application.

For specific implementations of embodiments shown in FIG. 14, refer to the foregoing embodiments. Details are not described herein again.

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are/is performed.

This application further provides a computer program product. The computer program product includes computer code or a computer program. When the computer code or the computer program is run on a computer, operations and/or processing performed by the second communication apparatus in the method provided in this application are/is performed.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on an actual requirement to implement the technical effects of the solutions provided in embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A cell selection method, comprising:
receiving a broadcast message, wherein the broadcast message comprises indication information, the indication information indicates to camp on a first capacity component carrier CCC cell, the first CCC cell is a CCC cell associated with a basic component carrier BCC cell, and the BCC cell is a BCC cell that is found by a terminal device and that satisfies a cell selection criterion; and
determining, based on the indication information and the cell selection criterion, whether to camp on the first CCC cell.

2. The method according to claim 1, wherein the first CCC cell is any one of one or more CCC cells associated with the BCC cell.

3. The method according to claim 1, wherein the indication information comprises identification information of the first CCC cell.

4. The method according to claim 1, wherein that the broadcast message comprises indication information comprises:
the broadcast message comprises information about the first CCC cell, and the indication information is comprised in the information about the first CCC cell.

5. The method according to claim 4, wherein the information about the first CCC cell comprises an identifier of the first CCC cell and access information of the first CCC cell.

6. The method according to any one of claims 3 to 5, wherein the first CCC cell is in a low-load state.

7. The method according to any one of claims 1 to 6, wherein the broadcast message further comprises information about the BCC cell.

8. The method according to any one of claims 1 to 7, wherein the determining, based on the indication information and the cell selection criterion, whether to camp on the first CCC cell comprises:
when the first CCC cell does not satisfy the cell selection criterion, determining not to camp on the first CCC cell; or
when the first CCC cell satisfies the cell selection criterion, determining to camp on the first CCC cell.

9. The method according to claim 8, wherein after the determining not to camp on the first CCC cell, the method further comprises:
determining to camp on the BCC cell.

10. The method according to any one of claims 1 to 9, wherein the receiving a broadcast message comprises:
receiving the broadcast message when the BCC cell is in a high-load state.

11. A cell reselection method, comprising:
receiving a broadcast message, wherein the broadcast message comprises neighboring cell information of a serving cell, and the neighboring cell information comprises information about a CCC cell and information about a BCC cell associated with the CCC cell; and
determining to reselect the CCC cell based on the information about the BCC cell and a cell reselection criterion.

12. The method according to claim 11, wherein the determining to reselect the CCC cell based on the information about the BCC cell and a cell reselection criterion comprises:
searching for the CCC cell based on the information about the CCC cell;
when the CCC cell satisfies the cell reselection criterion, searching for the BCC cell based on the information about the BCC cell; and
when the BCC cell is found, determining to reselect the CCC cell.

13. The method according to claim 12, wherein the determining to reselect the CCC cell comprises:
when reference signal received power RSRP of the BCC cell is greater than a first threshold and reference signal received quality RSRQ of the BCC cell is greater than a second threshold, determining to reselect the CCC cell.

14. The method according to any one of claims 11 to 13, wherein the information about the BCC cell comprises an identifier of the BCC cell and/or a channel number of the BCC cell.

15. A communication apparatus, comprising:
a transceiver module, configured to receive a broadcast message, wherein the broadcast message comprises indication information, the indication information indicates to camp on a first CCC cell, the first CCC cell is a CCC cell associated with a BCC cell, and the BCC cell is a BCC cell that is found by a terminal device and that satisfies a cell selection criterion; and
a processing module, configured to determine, based on the indication information and the cell selection criterion, whether to camp on the first CCC cell.

16. The communication apparatus according to claim 15, wherein the first CCC cell is any one of one or more CCC cells associated with the BCC cell.

17. The communication apparatus according to claim 15, wherein the indication information comprises identification information of the first CCC cell.

18. The communication apparatus according to claim 15, wherein that the broadcast message comprises indication information comprises:
the broadcast message comprises information about the first CCC cell, and the indication information is comprised in the information about the first CCC cell.

19. The communication apparatus according to claim 17 or 18, wherein the first CCC cell is in a low-load state.

20. The communication apparatus according to any one of claims 15 to 19, wherein the broadcast message further comprises information about the BCC cell.

21. The communication apparatus according to any one of claims 15 to 20, wherein the processing module is specifically configured to: when the first CCC cell does not satisfy the cell selection criterion, determine not to camp on the first CCC cell; or when the first CCC cell satisfies the cell selection criterion, determine to camp on the first CCC cell.

22. The communication apparatus according to claim 21, wherein the processing module is further configured to: when determining not to camp on the first CCC cell, determine to camp on the BCC cell.

23. The communication apparatus according to any one of claims 15 to 22, wherein the transceiver module is specifically configured to receive the broadcast message when the BCC cell is in a high-load state.

24. A communication apparatus, comprising:
a transceiver module, configured to receive a broadcast message, wherein the broadcast message comprises neighboring cell information of a serving cell, and the neighboring cell information comprises information about a CCC cell and information about a BCC cell associated with the CCC cell; and
a processing module, configured to determine to reselect the CCC cell based on the information about the BCC cell and a cell reselection criterion.

25. The communication apparatus according to claim 24, wherein the processing module is specifically configured to: search for the CCC cell based on the information about the CCC cell; when the CCC cell satisfies the cell reselection criterion, search for the BCC cell based on the information about the BCC cell; and when finding the BCC cell, determine to reselect the CCC cell.

26. The communication apparatus according to claim 25, wherein the processing module is specifically configured to: when reference signal received power RSRP of the BCC cell is greater than a first threshold and reference signal received quality RSRQ of the BCC cell is greater than a second threshold, determine to reselect the CCC cell.

27. The communication apparatus according to any one of claims 24 to 26, wherein the information about the BCC cell comprises an identifier of the BCC cell and/or a channel number of the BCC cell.

28. A communication apparatus, comprising a processor and a memory, wherein
the processor is configured to store computer-executable instructions; and
the processor is configured to execute the computer-executable instructions, so that the method according to any one of claims 1 to 10 is performed, or the method according to any one of claims 11 to 14 is performed.

29. A communication apparatus, comprising a logic circuit and an interface, wherein the logic circuit and the interface are coupled; and
the interface is configured to input and/or output code instructions, and the logic circuit is configured to execute the code instructions, so that the method according to any one of claims 1 to 10 is performed, or the method according to any one of claims 11 to 14 is performed.

30. A computer-readable storage medium, wherein the computer-readable storage medium is configured to store a computer program, and when the computer program is executed, the method according to any one of claims 1 to 10 is performed, or the method according to any one of claims 11 to 14 is performed.
